# EUROPEAN PATENT APPLICATION

(11) **EP 2 357 556 A1**
(43) Date of publication of application: **17.08.2011**
(21) Application number: 11151081.4
(22) Date of filing: 17.01.2011
(51) Int. Cl.: G06F 9/44, G06F 3/048

(54) **Automatically displaying and hiding an on-screen keyboard**

(30) Priority: 15.01.2010 US 295675 P; 28.05.2010 US 789666
(71) Applicant: Apple Inc., Cupertino, CA 95014 (US)
(72) Inventor: Moore, Bradford Allen, Sunnyvale, CA 94087 (US); Swales, Stephen W., Sunnyvale, CA 94087 (US)
(74) Representative: Lang, Johannes

(57) **Abstract**

A method and system for displaying an on-screen keyboard. An on-screen keyboard and a plurality of input fields are displayed on the touch-sensitive display. Each input field has an associated input interface and the on-screen keyboard is associated with a first input field. A subsequent contact with the touch-sensitive display that corresponds to a second input field is detected. The second input field is associated with a second input interface that is distinct from the on-screen keyboard and the second input interface is compatible with text input form the on-screen keyboard. The second input interface is concurrently displayed with the on-screen keyboard in response to the detected subsequent contact with the second input field.

## Description

### TECHNICAL FIELD

The disclosed embodiments relate generally to electronic devices with touch-sensitive surfaces, and more particularly, to electronic devices with touch-sensitive surfaces that display on-screen keyboards.

### BACKGROUND

The use of touch-sensitive surfaces as input devices for computers and other electronic computing devices has increased significantly in recent years. Exemplary touch-sensitive surfaces include touch pads and touch screen displays. Such surfaces are widely used to manipulate user interface objects on a display.

An exemplary user interface object is an on-screen keyboard that allows a user to enter text using a touch screen display. Typically, an on-screen keyboard is displayed when a user selects an input field that requires text entry. Existing methods of displaying and hiding an on-screen keyboard are distracting to a user. Consider a screen with numerous text fields. When a user sequentially selects each text field, the on-screen keyboard is displayed, hidden and then re-displayed. The appearance and disappearance of the on-screen keyboard as the user selects each text field can become very distracting to the user.

### SUMMARY

Accordingly, there is a need for computing devices with faster, more efficient methods and interfaces for displaying and hiding an on-screen keyboard and other types of on-screen user input interfaces. Such methods and interfaces may complement or replace conventional methods for displaying and hiding on-screen keyboards. Such methods and interfaces reduce the cognitive burden on a user and produce a more efficient human-machine interface. For battery-operated computing devices, such methods and interfaces conserve power and increase the time between battery charges.

The above deficiencies and other problems associated with user interfaces for computing devices with touch-sensitive surfaces are reduced or eliminated by the disclosed devices. In some embodiments, the device is a desktop computer. In some embodiments, the device is portable (e.g., a notebook computer, tablet computer, or handheld device). In some embodiments, the device has a touchpad. In some embodiments, the device has a touch-sensitive display (also known as a "touch screen" or "touch screen display"). In some embodiments, the device has a graphical user interface (GUI), one or more processors, memory and one or more modules, programs or sets of instructions stored in the memory for performing multiple functions. In some embodiments, the user interacts with the GUI primarily through finger contacts and gestures on the touch-sensitive surface. In some embodiments, the functions may include image editing, drawing, presenting, word processing, website creating, disk authoring, spreadsheet making, game playing, telephoning, video conferencing, e-mailing, instant messaging, workout support, digital photographing, digital videoing, web browsing, digital music playing, and/or digital video playing. Executable instructions for performing these functions may be included in a computer readable storage medium or other computer program product configured for execution by one or more processors.

In accordance with some embodiments, a method is provided to automatically display and hide an on-screen keyboard and other types of on-screen user input interfaces. The system and method determine where and when the on-screen keyboard is displayed. To prevent distracting the user, after an on-screen keyboard is displayed, the on-screen keyboard continues to be displayed for as long as possible in accordance with some embodiments. The on-screen keyboard continues to be displayed as a user selects other input fields that have associated input interfaces that are compatible with the on-screen keyboard. A user interface is compatible with the on-screen keyboard if the user interface is capable of being controlled by or manipulated by text input. Compatible input interfaces are concurrently displayed with the on-screen keyboard. The on-screen keyboard is enabled to control the compatible input interface while the input interface is displayed. The on-screen keyboard is hidden when a user selects an input field that has an associated input interface that is not compatible with the on-screen keyboard. Such method reduces the distraction to a user and produces a more efficient human-machine interface.

In accordance with some embodiments, a computer-implemented method is performed at an electronic device including one or more processors, memory and a touch-sensitive surface. The method includes displaying an on-screen keyboard and a plurality of input fields on the touch-sensitive display. Each input field has an associated input interface and the on-screen keyboard is associated with a first input field. The method also includes detecting a contact with the touch-sensitive display that corresponds to a second input field. The second input field is associated with a second input interface that is distinct from the on-screen keyboard and the second input interface is compatible with text input from the on-screen keyboard. The method further includes, in response to the detected subsequent contact with the second input field, displaying the second input interface concurrently with the on-screen keyboard.

In accordance with some embodiments, a computer-implemented method is performed at an electronic device including a processor, memory and a touch-sensitive surface. The method includes displaying a program window with a plurality of input fields. The method also includes detecting user contact with a first one of the input fields. The method further includes, if the first input field is associated with text input and an on-screen keyboard is not currently displayed, display the on-screen keyboard. The method further includes, if the first input field is associated with text input and an on-screen keyboard is currently displayed, continue to display the on-screen keyboard. The method further includes, if the first input field is not associated with text input and the on-screen keyboard is currently displayed, remove the on-screen keyboard.

In accordance with some embodiments, a computer-implemented method is performed at an electronic device including one or more processors, memory and a touch-sensitive display. The method includes displaying a first input interface and a plurality of input fields on the touch-sensitive display. Each input field has an associated input interface and the first input interface is associated with a first input field. The method further includes detecting a subsequent contact with the touch-sensitive display that corresponds to a second input field. The second input field is associated with a second input interface that is distinct from the first input interface and the second input interface is compatible with the first input interface. The method further includes, in response to the detected subsequent contact with the second input field, displaying the second input interface concurrently with the first input interface.

In accordance with some embodiments, an electronic device includes a touch-sensitive display, one or more processors, memory, and one or more programs; the one or more programs are stored in the memory and configured to be executed by the one or more processors and the one or more programs include instructions for performing the operations of any of the methods described above. In accordance with some embodiments, a graphical user interface on an electronic device with a touch-sensitive display, a memory, and one or more processors to execute one or more programs stored in the memory includes one or more of the elements displayed in any of the methods described above, which are updated in response to inputs, as described in any of the methods above. In accordance with some embodiments, a computer readable storage medium has stored therein instructions which when executed by an electronic device with a touch-sensitive display, cause the device to perform the operations of any of the methods described above. In accordance with some embodiments, an electronic device includes: a touch-sensitive display; and means for performing the operations of any of the methods described above. In accordance with some embodiments, an information processing apparatus, for use in a electronic device with a touch-sensitive display, includes means for performing the operations of any of the methods described above.

In accordance with some embodiments, an electronic device includes a processing unit and a touch sensitive display unit coupled to the processing unit, the processing unit being configured to: display an on-screen keyboard and a plurality of input fields on the touch-sensitive display unit, each input field having an associated input interface, wherein the on-screen keyboard is associated with a first input field; detect a contact with the touch-sensitive display unit that corresponds to a second input field, wherein the second input field is associated with a second input interface that is distinct from the on-screen keyboard and wherein the second input interface is compatible with text input from the on-screen keyboard; and in response to the detected subsequent contact with the second input field, display the second input interface concurrently with the on-screen keyboard on the touch-sensitive display unit.

In accordance with some embodiments, an electronic device includes a processing unit and a touch sensitive display unit coupled to the processing unit, the processing unit being configured to: display a program window with a plurality of input fields on the touch sensitive display unit; detect a user contact with a first one of the input fields; if the first input field is associated with text input and an on-screen keyboard is not currently displayed, display the on-screen keyboard on the touch-sensitive display unit; if the first input field is associated with text input and an on-screen keyboard is currently displayed, continue to display the on-screen keyboard on the touch-sensitive display unit; and if the first input field is not associated with text input and the on-screen keyboard is currently displayed, remove the on-screen keyboard from display on the touch-sensitive display unit.

In accordance with some embodiments, an electronic device includes a processing unit and a touch-sensitive display unit coupled to the processing unit, the processing unit being configured to: display a first input interface and a plurality of input fields on the touch-sensitive display, each input field having an associated input interface and wherein the first input interface is associated with a first input field; detect a subsequent contact with the touch-sensitive display that corresponds to a second input field, wherein the second input field is associated with a second input interface that is distinct from the first input interface and wherein the second input interface is compatible with the first input interface; and in response to the detected subsequent contact with the second input field, display the second input interface concurrently with the first input interface.

Thus, multifunction devices with touch-sensitive displays are provided with faster, more efficient methods and interfaces for displaying and hiding an on-screen keyboard and other types of on-screen user input interfaces, thereby increasing the effectiveness, efficiency, and user satisfaction with such devices. Such methods and interfaces may complement or replace conventional methods for displaying and hiding on-screen keyboards.

### BRIEF DESCRIPTION OF THE DRAWINGS

For a better understanding of the aforementioned embodiments of the invention as well as additional embodiments thereof, reference should be made to the Description of Embodiments below, in conjunction with the following drawings in which like reference numerals refer to corresponding parts throughout the figures.

Figures 1A and 1B are block diagrams illustrating portable multifunction devices with touch-sensitive displays in accordance with some embodiments.

Figure 1C is a block diagram illustrating exemplary components for event handling in accordance with some embodiments.

Figure 2 illustrates a portable multifunction device having a touch screen in accordance with some embodiments.

Figure 3 is a block diagram of an exemplary multifunction device with a display and a touch-sensitive surface in accordance with some embodiments.

Figures 4A and 4B illustrate exemplary user interfaces for a menu of applications on a portable multifunction device in accordance with some embodiments.

Figure 4C illustrates an exemplary user interface for a multifunction device with a touch-sensitive surface that is separate from the display in accordance with some embodiments.

Figures 5A-5G illustrate exemplary user interfaces for displaying and hiding an on-screen keyboard in accordance with some embodiments.

Figures 6A-6C are flow diagrams illustrating methods of for hiding and displaying an on-screen keyboard in accordance with some embodiments.

Figures 6D and 6E are flow diagrams illustrating a method of hiding and displaying an on-screen user input interface in accordance with some embodiments.

Figure 7 is a functional block diagram of an electronic device with a processing unit and a touch-sensitive display unit coupled to the processing unit in accordance with some embodiments.

### DESCRIPTION OF EMBODIMENTS

U.S. Patent Application No. 61/210,331, "Smart Keyboard Management for a Multifunction Device with a Touch Screen Display" filed March 16, 2009, is incorporated by reference herein in its entirety.

Reference will now be made in detail to embodiments, examples of which are illustrated in the accompanying drawings. In the following detailed description, numerous specific details are set forth in order to provide a thorough understanding of the present invention. However, it will be apparent to one of ordinary skill in the art that the present invention may be practiced without these specific details. In other instances, well-known methods, procedures, components, circuits, and networks have not been described in detail so as not to unnecessarily obscure aspects of the embodiments.

It will also be understood that, although the terms first, second, etc. may be used herein to describe various elements, these elements should not be limited by these terms. These terms are only used to distinguish one element from another. For example, a first contact could be termed a second contact, and, similarly, a second contact could be termed a first contact, without departing from the scope of the present invention. The first contact and the second contact are both contacts, but they are not the same contact.

The terminology used in the description of the invention herein is for the purpose of describing particular embodiments only and is not intended to be limiting of the invention. As used in the description of the invention and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' may be construed to mean "when" or "upon" or "in response to determining" or "in response to detecting," depending on the context. Similarly, the phrase "if it is determined" or "if [a stated condition or event] is detected" may be construed to mean "upon determining" or "in response to determining" or "upon detecting [the stated condition or event]" or "in response to detecting [the stated condition or event]," depending on the context.

Embodiments of computing devices, user interfaces for such devices, and associated processes for using such devices are described. In some embodiments, the computing device is a portable communications device such as a mobile telephone that also contains other functions, such as PDA and/or music player functions. Exemplary embodiments of portable multifunction devices include, without limitation, the iPhone® and iPod Touch® devices from Apple Inc. of Cupertino, California. Other portable devices such as laptops or tablet computers with touch-sensitive surfaces (e.g., touch screen displays and/or touch pads) may also be used. It should also be understood that, in some embodiments, the device is not a portable communications device, but is a desktop computer with a touch-sensitive surface (e.g., a touch screen display and/or a touch pad).

In the discussion that follows, a computing device that includes a display and a touch-sensitive surface is described. It should be understood, however, that the computing device may include one or more other physical user-interface devices, such as a physical keyboard, a mouse and/or a joystick.

The device supports a variety of applications, such as one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, and/or a digital video player application.

The various applications that may be executed on the device may use at least one common physical user-interface device, such as the touch-sensitive surface. One or more functions of the touch-sensitive surface as well as corresponding information displayed on the device may be adjusted and/or varied from one application to the next and/or within a respective application. In this way, a common physical architecture (such as the touch-sensitive surface) of the device may support the variety of applications with user interfaces that are intuitive and transparent.

The user interfaces may include one or more soft keyboard or on-screen embodiments. As used herein, "soft keyboard" and "on-screen keyboard" are used interchangeably. The soft keyboard embodiments may include standard (QWERTY) and/or non-standard configurations of symbols on the displayed icons of the keyboard, such as those described in U.S. Patent Applications 11/459,606, "Keyboards For Portable Electronic Devices," filed July 24, 2006, 11/459,615, "Touch Screen Keyboards For Portable Electronic Devices," filed July 24, 2006, and 61/210,331, "Smart Keyboard Management for a Multifunction Device with a Touch Screen Display," filed March 16, 2009 the contents of which are hereby incorporated by reference in their entireties. The keyboard embodiments may include a reduced number of icons (or soft keys) relative to the number of keys in existing physical keyboards, such as that for a typewriter. This may make it easier for users to select one or more icons in the keyboard, and thus, one or more corresponding symbols. The keyboard embodiments may be adaptive. For example, displayed icons may be modified in accordance with user actions, such as selecting one or more icons and/or one or more corresponding symbols. One or more applications on the device may utilize common and/or different keyboard embodiments. Thus, the keyboard embodiment used may be tailored to at least some of the applications. In some embodiments, one or more keyboard embodiments may be tailored to a respective user. For example, one or more keyboard embodiments may be tailored to a respective user based on a word usage history (lexicography, slang, individual usage) of the respective user. Some of the keyboard embodiments may be adjusted to reduce a probability of a user error when selecting one or more icons, and thus one or more symbols, when using the soft keyboard embodiments.

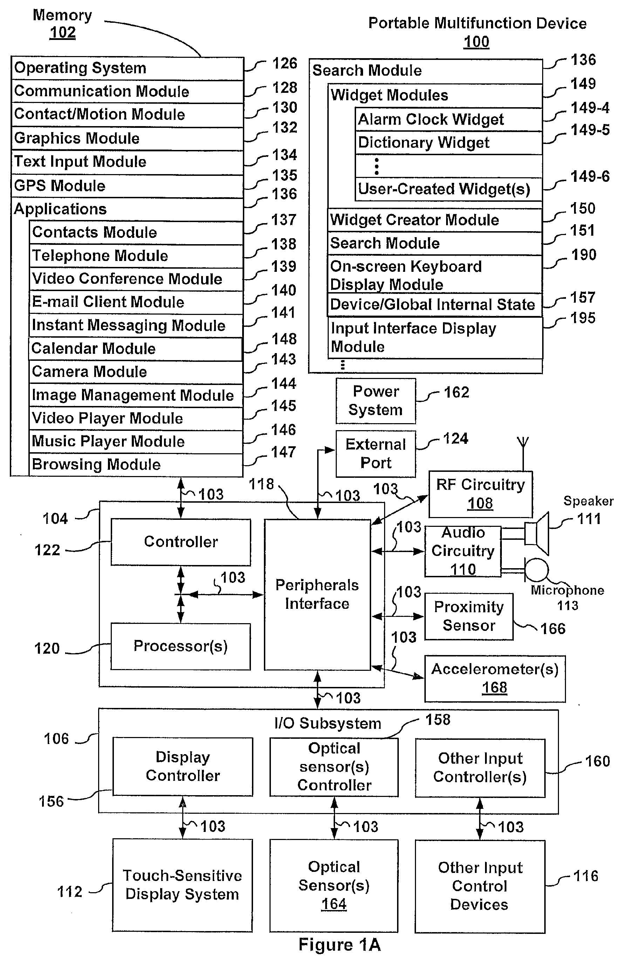

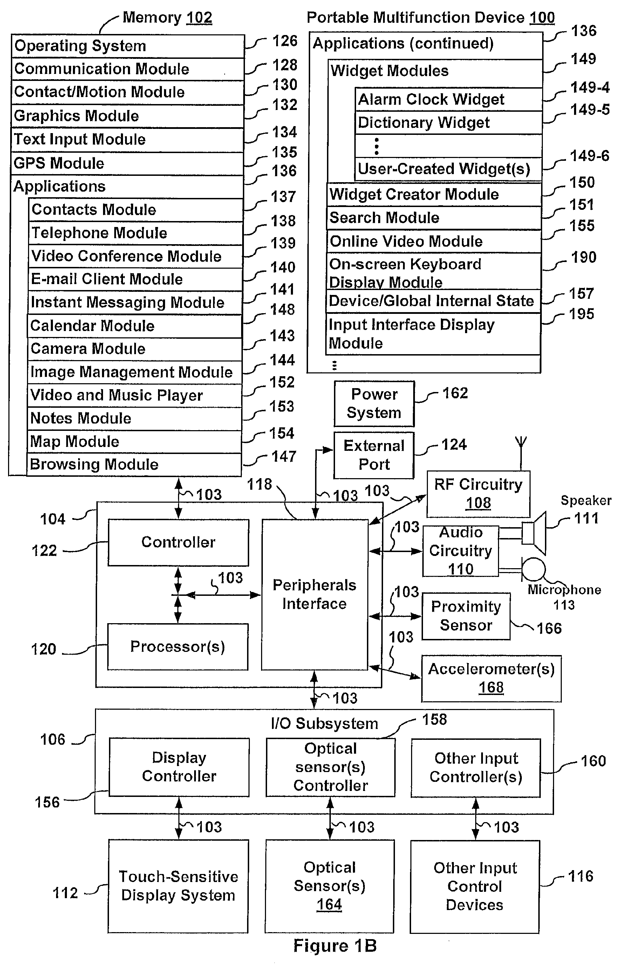

Attention is now directed toward embodiments of portable devices with touch-sensitive displays. Figures 1A and 1B are block diagrams illustrating portable multifunction devices 100 with touch-sensitive displays 112 in accordance with some embodiments. Touch-sensitive display 112 is sometimes called a "touch screen" for convenience, and may also be known as or called a touch-sensitive display system. Device 100 may include memory 102 (which may include one or more computer readable storage mediums), memory controller 122, one or more processing units (CPU's) 120, peripherals interface 118, RF circuitry 108, audio circuitry 110, speaker 111, microphone 113, input/output (I/O) subsystem 106, other input or control devices 116, and external port 124. Device 100 may include one or more optical sensors 164. These components may communicate over one or more communication buses or signal lines 103.

It should be appreciated that device 100 is only one example of a portable multifunction device, and that device 100 may have more or fewer components than shown, may combine two or more components, or may have a different configuration or arrangement of the components. The various components shown in Figures 1A and 1B may be implemented in hardware, software, or a combination of both hardware and software, including one or more signal processing and/or application specific integrated circuits.

Memory 102 may include high-speed random access memory and may also include non-volatile memory, such as one or more magnetic disk storage devices, flash memory devices, or other non-volatile solid-state memory devices. Access to memory 102 by other components of device 100, such as CPU 120 and the peripherals interface 118, may be controlled by memory controller 122.

Peripherals interface 118 can be used to couple input and output peripherals of the device to CPU 120 and memory 102. The one or more processors 120 run or execute various software programs and/or sets of instructions stored in memory 102 to perform various functions for device 100 and to process data.

In some embodiments, peripherals interface 118, CPU 120, and memory controller 122 may be implemented on a single chip, such as chip 104. In some other embodiments, they may be implemented on separate chips.

RF (radio frequency) circuitry 108 receives and sends RF signals, also called electromagnetic signals. RF circuitry 108 converts electrical signals to/from electromagnetic signals and communicates with communications networks and other communications devices via the electromagnetic signals. RF circuitry 108 may include well-known circuitry for performing these functions, including but not limited to an antenna system, an RF transceiver, one or more amplifiers, a tuner, one or more oscillators, a digital signal processor, a CODEC chipset, a subscriber identity module (SIM) card, memory, and so forth. RF circuitry 108 may communicate with networks, such as the Internet, also referred to as the World Wide Web (WWW), an intranet and/or a wireless network, such as a cellular telephone network, a wireless local area network (LAN) and/or a metropolitan area network (MAN), and other devices by wireless communication. The wireless communication may use any of a plurality of communications standards, protocols and technologies, including but not limited to Global System for Mobile Communications (GSM), Enhanced Data GSM Environment (EDGE), high-speed downlink packet access (HSDPA), wideband code division multiple access (W-CDMA), code division multiple access (CDMA), time division multiple access (TDMA), Bluetooth, Wireless Fidelity (Wi-Fi) (e.g., IEEE 802.11a, IEEE 802.11b, IEEE 802.11g and/or IEEE 802.11n), voice over Internet Protocol (VoIP), Wi-MAX, a protocol for e-mail (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), Instant Messaging and Presence Service (IMPS)), and/or Short Message Service (SMS), or any other suitable communication protocol, including communication protocols not yet developed as of the filing date of this document.

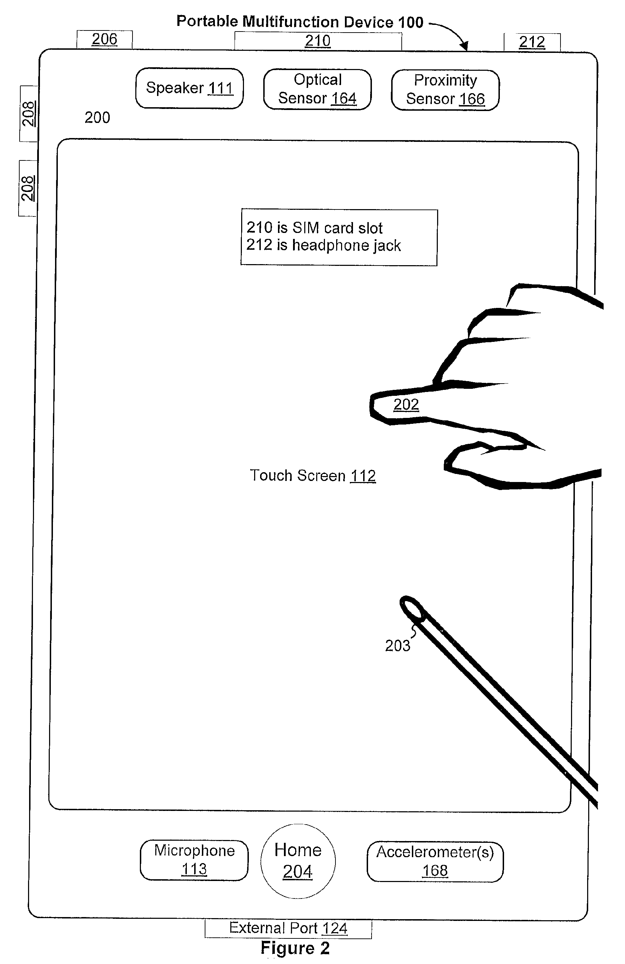

Audio circuitry 110, speaker 111, and microphone 113 provide an audio interface between a user and device 100. Audio circuitry 110 receives audio data from peripherals interface 118, converts the audio data to an electrical signal, and transmits the electrical signal to speaker 111. Speaker 111 converts the electrical signal to human-audible sound waves. Audio circuitry 110 also receives electrical signals converted by microphone 113 from sound waves. Audio circuitry 110 converts the electrical signal to audio data and transmits the audio data to peripherals interface 118 for processing. Audio data may be retrieved from and/or transmitted to memory 102 and/or RF circuitry 108 by peripherals interface 118. In some embodiments, audio circuitry 110 also includes a headset jack (e.g., 212, Figure 2). The headset jack provides an interface between audio circuitry 110 and removable audio input/output peripherals, such as output-only headphones or a headset with both output (e.g., a headphone for one or both ears) and input (e.g., a microphone).

I/O subsystem 106 couples input/output peripherals on device 100, such as touch screen 112 and other input control devices 116, to peripherals interface 118. I/O subsystem 106 may include display controller 156 and one or more input controllers 160 for other input or control devices. The one or more input controllers 160 receive/send electrical signals from/to other input or control devices 116. The other input control devices 11G may include physical buttons (e.g., push buttons, rocker buttons, etc.), dials, slider switches, joysticks, click wheels, and so forth. In some alternate embodiments, input controller(s) 160 may be coupled to any (or none) of the following: a keyboard, infrared port, USB port, and a pointer device such as a mouse. The one or more buttons (e.g., 208, Figure 2) may include an up/down button for volume control of speaker 111 and/or microphone 113. The one or more buttons may include a push button (e.g., 206, Figure 2). A quick press of the push button may disengage a lock of touch screen 112 or begin a process that uses gestures on the touch screen to unlock the device, as described in U.S. Patent Application 11/322,549, "Unlocking a Device by Performing Gestures on an Unlock Image," filed December 23, 2005, which is hereby incorporated by reference in its entirety. A longer press of the push button (e.g., 206) may turn power to device 100 on or off. The user may be able to customize a functionality of one or more of the buttons. Touch screen 112 is used to implement virtual or soft buttons and one or more soft keyboards.

Touch-sensitive display 112 provides an input interface and an output interface between the device and a user. Display controller 156 receives and/or sends electrical signals from/to touch screen 112. Touch screen 112 displays visual output to the user. The visual output may include graphics, text, icons, video, and any combination thereof (collectively termed "graphics"). In some embodiments, some or all of the visual output may correspond to user-interface objects.

Touch screen 112 has a touch-sensitive surface, sensor or set of sensors that accepts input from the user based on haptic and/or tactile contact. Touch screen 112 and display controller 156 (along with any associated modules and/or sets of instructions in memory 102) detect contact (and any movement or breaking of the contact) on touch screen 112 and converts the detected contact into interaction with user-interface objects (e.g., one or more soft keys, icons, web pages or images) that are displayed on touch screen 112. In an exemplary embodiment, a point of contact between touch screen 112 and the user corresponds to a finger of the user.

Touch screen 112 may use LCD (liquid crystal display) technology, LPD (light emitting polymer display) technology, or LED (light emitting diode) technology, although other display technologies may be used in other embodiments. Touch screen 112 and display controller 156 may detect contact and any movement or breaking thereof using any of a plurality of touch sensing technologies now known or later developed, including but not limited to capacitive, resistive, infrared, and surface acoustic wave technologies, as well as other proximity sensor arrays or other elements for determining one or more points of contact with touch screen 112. In an exemplary embodiment, projected mutual capacitance sensing technology is used, such as that found in the iPhoned® and iPod Touch® from Apple Inc. of Cupertino, California.

A touch-sensitive display in some embodiments of touch screen 112 may be analogous to the multi-touch sensitive touchpads described in the following U.S. Patents: 6,323,846 (Westerman et al.), 6,570,557 (Westerman et al.), and/or 6,677,932 (Westerman), and/or U.S. Patent Publication 2002/0015024A1, each of which is hereby incorporated by reference in its entirety. However, touch screen 112 displays visual output from portable device 100, whereas touch sensitive touchpads do not provide visual output.

A touch-sensitive display in some embodiments of touch screen 112 may be as described in the following applications: (1) U.S. Patent Application No. 11/381,313, "Multipoint Touch Surface Controller," filed May 2, 2006; (2) U.S. Patent Application No. 10/840,862, "Multipoint Touchscreen," filed May 6, 2004; (3) U.S. Patent Application No. 10/903,964, "Gestures For Touch Sensitive Input Devices," filed July 30, 2004; (4) U.S. Patent Application No. 11/048,2G4, "Gestures For Touch Sensitive Input Devices," filed January 31, 2005; (5) U.S. Patent Application No. 11/038,590, "Mode-Based Graphical User Interfaces For Touch Sensitive Input Devices," filed January 18, 2005; (6) U.S. Patent Application No. 11/228,758, "Virtual Input Device Placement On A Touch Screen User Interface," filed September 16, 2005; (7) U.S. Patent Application No. 11/228,700, "Operation Of A Computer With A Touch Screen Interface," filed September 16, 2005; (8) U.S. Patent Application No. 11/228,737, "Activating Virtual Keys Of A Touch-Screen Virtual Keyboard," filed September 16, 2005; and (9) U.S. Patent Application No. 11/367,749, "Multi-Functional Hand-Held Device," filed March 3, 2006. All of these applications are incorporated by reference herein in their entirety.

Touch screen 112 may have a resolution in excess of 100 dpi. In some embodiments, the touch screen has a resolution of approximately 160 dpi. The user may make contact with touch screen 112 using any suitable object or appendage, such as a stylus, a finger, and so forth. In some embodiments, the user interface is designed to work primarily with finger-based contacts and gestures, which can be less precise than stylus-based input due to the larger area of contact of a finger on the touch screen. In some embodiments, the device translates the rough finger-based input into a precise pointer/cursor position or command for performing the actions desired by the user.

In some embodiments, in addition to the touch screen, device 100 may include a touchpad (not shown) for activating or deactivating particular functions. In some embodiments, the touchpad is a touch-sensitive area of the device that, unlike the touch screen, does not display visual output. The touchpad may be a touch-sensitive surface that is separate from touch screen 112 or an extension of the touch-sensitive surface formed by the touch screen.

In some embodiments, device 100 may include a physical or virtual wheel (e.g., a click wheel) as input control device 116. A user may navigate among and interact with one or more graphical objects (e.g., icons) displayed in touch screen 112 by rotating the click wheel or by moving a point of contact with the click wheel (e.g., where the amount of movement of the point of contact is measured by its angular displacement with respect to a center point of the click wheel). The click wheel may also be used to select one or more of the displayed icons. For example, the user may press down on at least a portion of the click wheel or an associated button. User commands and navigation commands provided by the user via the click wheel may be processed by input controller 160 as well as one or more of the modules and/or sets of instructions in memory 102. For a virtual click wheel, the click wheel and click wheel controller may be part of touch screen 112 and display controller 156, respectively. For a virtual click wheel, the click wheel may be either an opaque or semitransparent object that appears and disappears on the touch screen display in response to user interaction with the device. In some embodiments, a virtual click wheel is displayed on the touch screen of a portable multifunction device and operated by user contact with the touch screen.

Device 100 also includes power system 162 for powering the various components. Power system 162 may include a power management system, one or more power sources (e.g., battery, alternating current (AC)), a recharging system, a power failure detection circuit, a power converter or inverter, a power status indicator (e.g., a light-emitting diode (LED)) and any other components associated with the generation, management and distribution of power in portable devices.

Device 100 may also include one or more optical sensors 164. Figures 1A and 1B show an optical sensor coupled to optical sensor controller 158 in I/O subsystem 106. Optical sensor 164 may include charge-coupled device (CCD) or complementary metal-oxide semiconductor (CMOS) phototransistors. Optical sensor 164 receives light from the environment, projected through one or more lens, and converts the light to data representing an image. In conjunction with imaging module 143 (also called a camera module), optical sensor 164 may capture still images or video. In some embodiments, an optical sensor is located on the back of device 100, opposite touch screen display 112 on the front of the device, so that the touch screen display may be used as a viewfinder for still and/or video image acquisition. In some embodiments, an optical sensor is located on the front of the device so that the user's image may be obtained for videoconferencing while the user views the other video conference participants on the touch screen display. In some embodiments, the position of optical sensor 164 can be changed by the user (e.g., by rotating the lens and the sensor in the device housing) so that a single optical sensor 164 may be used along with the touch screen display for both video conferencing and still and/or video image acquisition.

Device 100 may also include one or more proximity sensors 166. Figures 1A and 1B show proximity sensor 166 coupled to peripherals interface 118. Alternately, proximity sensor 166 may be coupled to input controller 160 in I/O subsystem 106. Proximity sensor 166 may perform as described in U.S. Patent Application Nos. 11/241,839, "Proximity Detector In Handheld Device"; 11/240,788, "Proximity Detector In Handheld Device"; 11/620,702, "Using Ambient Light Sensor To Augment Proximity Sensor Output"; 11/586,862, "Automated Response To And Sensing Of User Activity In Portable Devices"; and 11/638,251, "Methods And Systems For Automatic Configuration Of Peripherals," which are hereby incorporated by reference in their entirety. In some embodiments, the proximity sensor turns off and disables touch screen 112 when the multifunction device is placed near the user's ear (e.g., when the user is making a phone call).

Device 100 may also include one or more accelerometers 168. Figures 1A and 1B show accelerometer 168 coupled to peripherals interface 118. Alternately, accelerometer 168 may be coupled to an input controller 160 in I/O subsystem 106. Accelerometer 168 may perform as described in U.S. Patent Publication No. 20050190059, "Acceleration-based Theft Detection System for Portable Electronic Devices," and U.S. Patent Publication No. 20060017692, "Methods And Apparatuses For Operating A Portable Device Based On An Accelerometer," both of which are which are incorporated by reference herein in their entirety. In some embodiments, information is displayed on the touch screen display in a portrait view or a landscape view based on an analysis of data received from the one or more accelerometers. Device 100 optionally includes, in addition to accelerometer(s) 168, a magnetometer (not shown) and a GPS (or GLONASS or other global navigation system) receiver (not shown) for obtaining information concerning the location and orientation (e.g., portrait or landscape) of device 100.

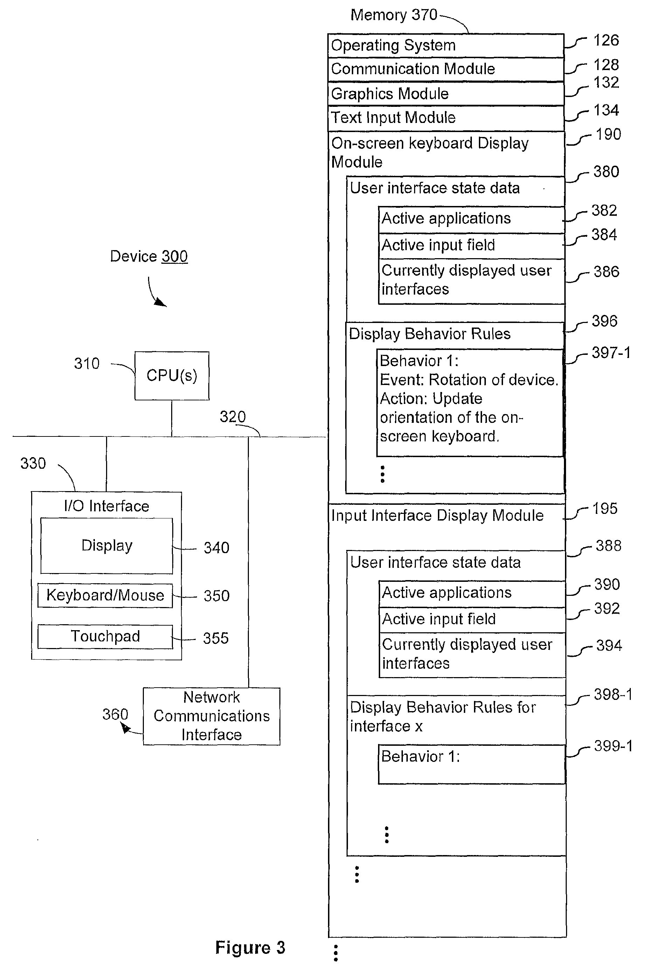

In some embodiments, the software components stored in memory 102 include operating system 126, communication module (or set of instructions) 128, contact/motion module (or set of instructions) 130, graphics module (or set of instructions) 132, text input module (or set of instructions) 134, Global Positioning System (GPS) module (or set of instructions) 135, and applications (or sets of instructions) 136. Furthermore, in some embodiments memory 102 stores device/global internal state 157, as shown in Figures 1A, 1B and 3. Device/global internal state 157 includes one or more of: active application state, indicating which applications, if any, are currently active; display state, indicating what applications, views or other information occupy various regions of touch screen display 112; sensor state, including information obtained from the device's various sensors and input control devices 116; and location information concerning the device's location and/or attitude.

Operating system 126 (e.g., Darwin, RTXC, LINUX, UNIX, OS X, WINDOWS, or an embedded operating system such as VxWorlcs) includes various software components and/or drivers for controlling and managing general system tasks (e.g., memory management, storage device control, power management, etc.) and facilitates communication between various hardware and software components.

Communication module 128 facilitates communication with other devices over one or more external ports 124 and also includes various software components for handling data received by RF circuitry 108 and/or external port 124. External port 124 (e.g., Universal Serial Bus (USB), FIREWIRE, etc.) is adapted for coupling directly to other devices or indirectly over a network (e.g., the Internet, wireless LAN, etc.). In some embodiments, the external port is a multi-pin (e.g., 30-pin) connector that is the same as, or similar to and/or compatible with the 30-pin connector used on iPod (trademark of Apple Inc.) devices.

Contact/motion module 130 may detect contact with touch screen 112 (in conjunction with display controller 156) and other touch sensitive devices (e.g., a touchpad or physical click wheel). Contact/motion module 130 includes various software components for performing various operations related to detection of contact, such as determining if contact has occurred (e.g., detecting a finger-down event), determining if there is movement of the contact and tracking the movement across the touch-sensitive surface (e.g., detecting one or more finger-dragging events), and determining if the contact has ceased (e.g., detecting a finger-up event or a break in contact). Contact/motion module 130 receives contact data from the touch-sensitive surface. Determining movement of the point of contact, which is represented by a series of contact data, may include determining speed (magnitude), velocity (magnitude and direction), and/or an acceleration (a change in magnitude and/or direction) of the point of contact. These operations may be applied to single contacts (e.g., one finger contacts) or to multiple simultaneous contacts (e.g., "multitouch "/multiple finger contacts). In some embodiments, contact/motion module 130 and display controller 156 detects contact on a touchpad. In some embodiments, contact/motion module 130 and controller 160 detects contact on a click wheel.

Contact/motion module 130 may detect a gesture input by a user. Different gestures on the touch-sensitive surface have different contact patterns. Thus, a gesture may be detected by detecting a particular contact pattern. For example, detecting a finger tap gesture includes detecting a finger-down event followed by detecting a finger-up (lift off) event at the same position (or substantially the same position) as the finger-down event (e.g., at the position of an icon). As another example, detecting a finger swipe gesture on the touch-sensitive surface includes detecting a finger-down event followed by detecting one or more finger-dragging events, and subsequently followed by detecting a finger-up (lift off) event.

Graphics module 132 includes various known software components for rendering and displaying graphics on touch screen 112 or other display, including components for changing the intensity of graphics that are displayed. As used herein, the term "graphics" includes any object that can be displayed to a user, including without limitation text, web pages, icons (such as user-interface objects including soft keys), digital images, videos, animations and the like.

In some embodiments, graphics module 132 stores data representing graphics to be used. Each graphic may be assigned a corresponding code. Graphics module 132 receives, from applications etc., one or more codes specifying graphics to be displayed along with, if necessary, coordinate data and other graphic property data, and then generates screen image data to output to display controller 156.

Text input module 134, which may be a component of graphics module 132, provides soft keyboards for entering text in various applications (e.g., contacts 137, e-mail 140, IM 141, browser 147, and any other application that needs text input).

GPS module 135 determines the location of the device and provides this information for use in various applications (e.g., to telephone 138 for use in location-based dialing, to camera 143 as picture/video metadata, and to applications that provide location-based services such as weather widgets, local yellow page widgets, and map/navigation widgets).

The applications 136 may include the following modules (or sets of instructions), or a subset or superset thereof:
- a contacts module 137 (sometimes called an address book or contact list);
- a telephone module 138;
- a video conferencing module 139;
- an e-mail client module 140;
- an instant messaging (IM) module 141;
- a workout support module;
- a camera module 143 for still and/or video images;
- an image management module 144;
- a video player module 145;
- a music player module 146;
- a browser module 147;
- a calendar module 148;
- widget modules 149, which may include weather widget, stocks widget, calculator widget, alarm clock widget 149-4, dictionary widget 149-5, and other widgets obtained by the user, as well as user-created widgets 149-6;
- widget creator module 150 for making user-created widgets 149-6;
- search module 151;
- video and music player module 152, which merges video player module 145 and music player module 146;
- notes module 153;
- map module 154; and/or
- online video module 155.

Examples of other applications 136 that may be stored in memory 102 include other word processing applications, other image editing applications, drawing applications, presentation applications, JAVA-enabled applications, encryption, digital rights management, voice recognition, and voice replication.

In conjunction with touch screen 112, display controller 156, contact module 130, graphics module 132, and text input module 134, contacts module 137 may be used to manage an address book or contact list (e.g., stored in application internal state 192 of contacts module 137 in memory 102 or memory 370), including: adding name(s) to the address book; deleting name(s) from the address book; associating telephone number(s), e-mail address(es), physical address(es) or other information with a name; associating an image with a name; categorizing and sorting names; providing telephone numbers or e-mail addresses to initiate and/or facilitate communications by telephone 138, video conference 139, e-mail 140, or IM 141; and so forth.

In conjunction with RF circuitry 108, audio circuitry 110, speaker 111, microphone 113, touch screen 112, display controller 156, contact module 130, graphics module 132, and text input module 134, telephone module 138 may be used to enter a sequence of characters corresponding to a telephone number, access one or more telephone numbers in address book 137, modify a telephone number that has been entered, dial a respective telephone number, conduct a conversation and disconnect or hang up when the conversation is completed. As noted above, the wireless communication may use any of a plurality of communications standards, protocols and technologies.

In conjunction with RF circuitry 108, audio circuitry 110, speaker 111, microphone 113, touch screen 112, display controller 156, optical sensor 164, optical sensor controller 158, contact module 130, graphics module 132, text input module 134, contact list 137, and telephone module 138, videoconferencing module 139 includes executable instructions to initiate, conduct, and terminate a video conference between a user and one or more other participants in accordance with user instructions.

In conjunction with RF circuitry 108, touch screen 112, display controller 156, contact module 130, graphics module 132, and text input module 134, e-mail client module 140 includes executable instructions to create, send, receive, and manage e-mail in response to user instructions. In conjunction with image management module 144, e-mail client module 140 makes it very easy to create and send e-mails with still or video images taken with camera module 143.

In conjunction with RF circuitry 108, touch screen 112, display controller 156, contact module 130, graphics module 132, and text input module 134, the instant messaging module 141 includes executable instructions to enter a sequence of characters corresponding to an instant message, to modify previously entered characters, to transmit a respective instant message (for example, using a Short Message Service (SMS) or Multimedia Message Service (MMS) protocol for telephony-based instant messages or using XMPP, SIMPLE, or IMPS for Internet-based instant messages), to receive instant messages and to view received instant messages. In some embodiments, transmitted and/or received instant messages may include graphics, photos, audio files, video files and/or other attachments as are supported in a MMS and/or an Enhanced Messaging Service (EMS). As used herein, "instant messaging" refers to both telephony-based messages (e.g., messages sent using SMS or MMS) and Internet-based messages (e.g., messages sent using XMPP, SIMPLE, or IMPS).

In conjunction with RF circuitry 108, touch screen 112, display controller 156, contact module 130, graphics module 132, text input module 134, GPS module 135, map module 154, and music player module 146, workout support module 142 includes executable instructions to create workouts (e.g., with time, distance, and/or calorie burning goals); communicate with workout sensors (sports devices); receive workout sensor data; calibrate sensors used to monitor a workout; select and play music for a workout; and display, store and transmit workout data.

In conjunction with touch screen 112, display controller 156, optical sensor(s) 164, optical sensor controller 158, contact module 130, graphics module 132, and image management module 144, camera module 143 includes executable instructions to capture still images or video (including a video stream) and store them into memory 102, modify characteristics of a still image or video, or delete a still image or video from memory 102.

In conjunction with touch screen 112, display controller 156, contact module 130, graphics module 132, text input module 134, and camera module 143, image management module 144 includes executable instructions to arrange, modify (e.g., edit), or otherwise manipulate, label, delete, present (e.g., in a digital slide show or album), and store still and/or video images.

In conjunction with touch screen 112, display controller 156, contact module 130, graphics module 132, audio circuitry 110, and speaker 111, video player module 145 includes executable instructions to display, present or otherwise play back videos (e.g., on touch screen 112 or on an external, connected display via external port 124).

In conjunction with touch screen 112, display system controller 156, contact module 130, graphics module 132, audio circuitry 110, speaker 111, RF circuitry 108, and browser module 147, music player module 146 includes executable instructions that allow the user to download and play back recorded music and other sound files stored in one or more file formats, such as MP3 or AAC files. In some embodiments, device 100 may include the functionality of an MP3 player, such as an iPod (trademark of Apple Inc.).

In conjunction with RF circuitry 108, touch screen 112, display system controller 156, contact module 130, graphics module 132, and text input module 134, browser module 147 includes executable instructions to browse the Internet in accordance with user instructions, including searching, linking to, receiving, and displaying web pages or portions thereof, as well as attachments and other files linked to web pages.

In conjunction with RF circuitry 108, touch screen 112, display system controller 156, contact module 130, graphics module 132, text input module 134, e-mail client module 140, and browser module 147, calendar module 148 includes executable instructions to create, display, modify, and store calendars and data associated with calendars (e.g., calendar entries, to do lists, etc.) in accordance with user instructions.

In conjunction with RF circuitry 108, touch screen 112, display system controller 156, contact module 130, graphics module 132, text input module 134, and browser module 147, widget modules 149 are mini-applications that may be downloaded and used by a user (e.g., weather widget 149-1, stocks widget 149-2, calculator widget 149-3, alarm clock widget 149-4, and dictionary widget 149-5) or created by the user (e.g., user-created widget 149-6). In some embodiments, a widget includes an HTML (Hypertext Markup Language) file, a CSS (Cascading Style Sheets) file, and a JavaScript file. In some embodiments, a widget includes an XML (Extensible Markup Language) file and a JavaScript file (e.g., Yahoo! Widgets).

In conjunction with RF circuitry 108, touch screen 112, display system controller 156, contact module 130, graphics module 132, text input module 134, and browser module 147, the widget creator module 150 may be used by a user to create widgets (e.g., turning a user-specified portion of a web page into a widget).

In conjunction with touch screen 112, display system controller 156, contact module 130, graphics module 132, and text input module 134, search module 151 includes executable instructions to search for text, music, sound, image, video, and/or other files in memory 102 that match one or more search criteria (e.g., one or more user-specified search terms) in accordance with user instructions.

In conjunction with touch screen 112, display controller 156, contact module 130, graphics module 132, and text input module 134, notes module 153 includes executable instructions to create and manage notes, to do lists, and the like in accordance with user instructions.

In conjunction with RF circuitry 108, touch screen 112, display system controller 156, contact module 130, graphics module 132, text input module 134, GPS module 135, and browser module 147, map module 154 may be used to receive, display, modify, and store maps and data associated with maps (e.g., driving directions; data on stores and other points of interest at or near a particular location; and other location-based data) in accordance with user instructions.

In conjunction with touch screen 112, display system controller 156, contact module 130, graphics module 132, audio circuitry 110, speaker 111, RF circuitry 108, text input module 134, e-mail client module 140, and browser module 147, online video module 155 includes instructions that allow the user to access, browse, receive (e.g., by streaming and/or download), play back (e.g., on the touch screen or on an external, connected display via external port 124), send an e-mail with a link to a particular online video, and otherwise manage online videos in one or more file formats, such as H.264. In some embodiments, instant messaging module 141, rather than e-mail client module 140, is used to send a link to a particular online video. Additional description of the online video application can be found in U.S. Provisional Patent Application No. 60/936,562, "Portable Multifunction Device, Method, and Graphical User Interface for Playing Online Videos," filed June 20, 2007, and U.S. Patent Application No. 11/968,067, "Portable Multifunction Device, Method, and Graphical User Interface for Playing Online Videos," filed December 31, 2007, the content of which is hereby incorporated by reference in its entirety.

As discussed in greater detail in the discussion of Figure 3, the on-screen keyboard display module 190 determines where and when to display an on-screen keyboard.

As discussed in greater detail in the discussion of Figure 3, the interface display module 195 determines where and when to display a standard user object.

Each of the above identified modules and applications correspond to a set of executable instructions for performing one or more functions described above and the methods described in this application (e.g., the computer-implemented methods and other information processing methods described herein). These modules (i.e., sets of instructions) need not be implemented as separate software programs, procedures or modules, and thus various subsets of these modules may be combined or otherwise re-arranged in various embodiments. For example, video player module 145 may be combined with music player module 146 into a single module (e.g., video and music player module 152, Figure 1B). In some embodiments, memory 102 may store a subset of the modules and data structures identified above. Furthermore, memory 102 may store additional modules and data structures not described above.

In some embodiments, the device 100 is a device where operation of a predefined set of functions on the device is performed exclusively through a touch screen 112 and/or a touchpad. By using a touch screen and/or a touchpad as the primary input control device for operation of the device 100, the number of physical input control devices (such as push buttons, dials, and the like) on the device 100 may be reduced.

The predefined set of functions that may be performed exclusively through a touch screen and/or a touchpad include navigation between user interfaces. In some embodiments, the touchpad, when touched by the user, navigates the device 100 to a main, home, or root menu from any user interface that may be displayed on the device 100. In such embodiments, the touchpad may be referred to as a "menu button." In some other embodiments, the menu button may be a physical push button or other physical input control device instead of a touchpad.

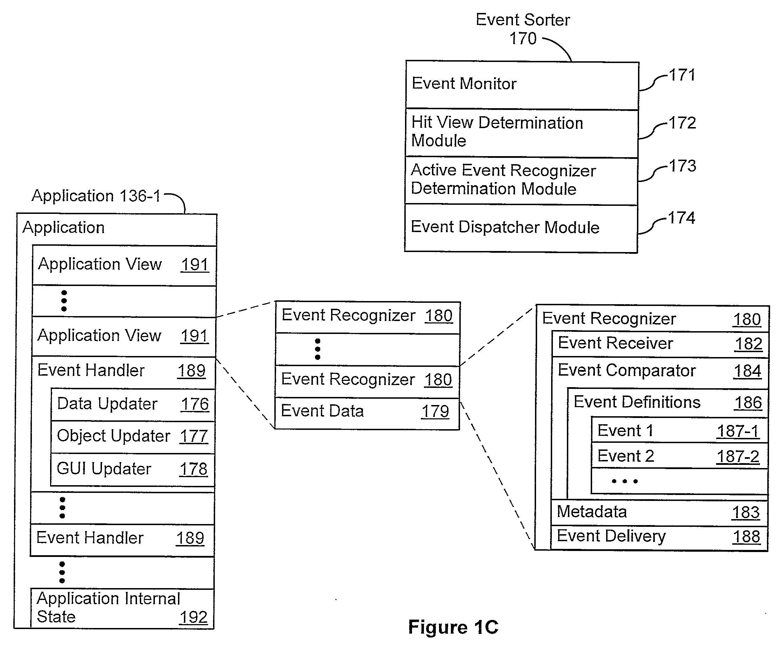

Figure 1C is a block diagram illustrating exemplary components for event handling in accordance with some embodiments. In some embodiments, memory 102 (in Figures 1A and 1B) or 370 (Figure 3) includes event sorter 170 (e.g., in operating system 126) and a respective application 136-1 (e.g., any of the aforementioned applications 137-151, 155, 380-390).

Event sorter 170 receives event information and determines the application 136-1 and application view 191 of application 136-1 to which to deliver the event information. Event sorter 170 includes event monitor 171 and event dispatcher module 174. In some embodiments, application 136-1 includes application internal state 192, which indicates the current application view(s) displayed on touch sensitive display 112 when the application is active or executing. In some embodiments, device/global internal state 157 is used by event sorter 170 to determine which application(s) is(are) currently active, and application internal state 192 is used by event sorter 170 to determine application views 191 to which to deliver event information.

In some embodiments, application internal state 192 includes additional information, such as one or more of: resume information to be used when application 136-1 resumes execution, user interface state information that indicates information being displayed or that is ready for display by application 136-1, a state queue for enabling the user to go back to a prior state or view of application 136-1, and a redo/undo queue of previous actions taken by the user.

Event monitor 171 receives event information from peripherals interface 118. Event information includes information about a sub-event (e.g., a user touch on touch-sensitive display 112, as part of a multi-touch gesture). Peripherals interface 118 transmits information it receives from I/O subsystem 106 or a sensor, such as proximity sensor 166, accelerometer(s) 168, and/or microphone 113 (through audio circuitry 110). Information that peripherals interface 118 receives from I/O subsystem 106 includes information from touch-sensitive display 112 or a touch-sensitive surface.

In some embodiments, event monitor 171 sends requests to the peripherals interface 118 at predetermined intervals. In response, peripherals interface 118 transmits event information. In other embodiments, peripheral interface 118 transmits event information only when there is a significant event (e.g., receiving an input beyond a predetermined noise threshold and/or for more than a predetermined duration).

In some embodiments, event sorter 170 also includes a hit view determination module 172 and/or an active event recognizer determination module 173.

Hit view determination module 172 provides software procedures for determining where a sub-event has taken place within one or more views, when touch sensitive display 112 displays more than one view. Views are made up of controls and other elements that a user can see on the display.

Another aspect of the user interface associated with an application is a set views, sometimes herein called application views or user interface windows, in which information is displayed and touch-based gestures occur. The application views (of a respective application) in which a touch is detected may correspond to programmatic levels within a programmatic or view hierarchy of the application. For example, the lowest level view in which a touch is detected may be called the hit view, and the set of events that are recognized as proper inputs may be determined based, at least in part, on the hit view of the initial touch that begins a touch-based gesture.

Hit view determination module 172 receives information related to sub-events of a touch-based gesture. When an application has multiple views organized in a hierarchy, hit view determination module 172 identifies a hit view as the lowest view in the hierarchy which should handle the sub-event. In most circumstances, the hit view is the lowest level view in which an initiating sub-event occurs (i.e., the first sub-event in the sequence of sub-events that form an event or potential event). Once the hit view is identified by the hit view determination module, the hit view typically receives all sub-events related to the same touch or input source for which it was identified as the hit view.

Active event recognizer determination module 173 determines which view or views within a view hierarchy should receive a particular sequence of sub-events. In some embodiments, active event recognizer determination module 173 determines that only the hit view should receive a particular sequence of sub-events. In other embodiments, active event recognizer determination module 173 determines that all views that include the physical location of a sub-event are actively involved views, and therefore determines that all actively involved views should receive a particular sequence of sub-events. In other embodiments, even if touch sub-events were entirely confined to the area associated with one particular view, views higher in the hierarchy would still remain as actively involved views.

Event dispatcher module 174 dispatches the event information to an event recognizer (e.g., event recognizer 180). In embodiments including active event recognizer determination module 173, event dispatcher module 174 delivers the event information to an event recognizer determined by active event recognizer determination module 173. In some embodiments, event dispatcher module 174 stores in an event queue the event information, which is retrieved by a respective event receiver module 182.

In some embodiments, operating system 126 includes event sorter 170. Alternatively, application 136-1 includes event sorter 170. In yet other embodiments, event sorter 170 is a stand-alone module, or a part of another module stored in memory 102, such as contact/motion module 130.

In some embodiments, application 136-1 includes a plurality of event handlers 190 and one or more application views 191, each of which includes instructions for handling touch events that occur within a respective view of the application's user interface. Each application view 191 of the application 136-1 includes one or more event recognizers 180. Typically, a respective application view 191 includes a plurality of event recognizers 180. In other embodiments, one or more of event recognizers 180 are part of a separate module, such as a user interface kit (not shown) or a higher level object from which application 136-1 inherits methods and other properties. In some embodiments, a respective event handler 189 includes one or more of: data updater 176, object updater 177, GUI updater 178, and/or event data 179 received from event sorter 170. Event handler 189 may utilize or call data updater 176, object updater 177 or GUI updater 178 to update the application internal state 192. Alternatively, one or more of the application views 191 includes one or more respective event handlers 189. Also, in some embodiments, one or more data updater 176, object updater 177, and GUI updater 178 are included in a respective application view 191.

A respective event recognizer 180 receives event information (e.g., event data 179) from event sorter 170, and identifies an event from the event information. Event recognizer 180 includes event receiver 182 and event comparator 184. In some embodiments, event recognizer 180 also includes at least a subset of: metadata 183, and event delivery instructions 188 (which may include sub-event delivery instructions).

Event receiver 182 receives event information from the event sorter 170. The event information includes information about a sub-event, for example, a touch or a touch movement. Depending on the sub-event, the event information also includes additional information, such as location of the sub-event. When the sub-event concerns motion of a touch the event information may also include speed and direction of the sub-event. In some embodiments, events include rotation of the device from one orientation to another (e.g., from a portrait orientation to a landscape orientation, or vice versa), and the event information includes corresponding information about the current orientation (also called device attitude) of the device.

Event comparator 184 compares the event information to predefined event or sub-event definitions and, based on the comparison, determines an event or sub-event, or determines or updates the state of an event or sub-event. In some embodiments, event comparator 184 includes event definitions 186. Event definitions 186 contain definitions of events (e.g., predefined sequences of sub-events), for example, event 1 (187-1), event 2 (187-2), and others. In some embodiments, sub-events in an event 187 include, for example, touch begin, touch end, touch movement, touch cancellation, and multiple touching. In one example, the definition for event 1 (187-1) is a double tap on a displayed object. The double tap, for example, comprises a first touch (touch begin) on the displayed object for a predetermined phase, a first lift-off (touch end) for a predetermined phase, a second touch (touch begin) on the displayed object for a predetermined phase, and a second lift-off (touch end) for a predetermined phase. In another example, the definition for event 2 (187-2) is a dragging on a displayed object. The dragging, for example, comprises a touch (or contact) on the displayed object for a predetermined phase, a movement of the touch across touch-sensitive display 112, and lift-off of the touch (touch end). In some embodiments, the event also includes information for one or more associated event handlers 189.

In some embodiments, event definition 186 includes a definition of an event for a respective user-interface object. In some embodiments, event comparator 184 performs a hit test to determine which user-interface object is associated with a sub-event. For example, in an application view in which three user-interface objects are displayed on touch-sensitive display 112, when a touch is detected on touch-sensitive display 112, event comparator 184 performs a hit test to determine which of the three user-interface objects is associated with the touch (sub-event). If each displayed object is associated with a respective event handler 189, the event comparator uses the result of the hit test to determine which event handler 189 should be activated. For example, event comparator 184 selects an event handler associated with the sub-event and the object triggering the hit test.

In some embodiments, the definition for a respective event 187 also includes delayed actions that delay delivery of the event information until after it has been determined whether the sequence of sub-events does or does not correspond to the event recognizer's event type.

When a respective event recognizer 180 determines that the series of sub-events do not match any of the events in event definitions 186, the respective event recognizer 180 enters an event impossible, event failed, or event ended state, after which it disregards subsequent sub-events of the touch-based gesture. In this situation, other event recognizers, if any, that remain active for the hit view continue to track and process sub-events of an ongoing touch-based gesture.

In some embodiments, a respective event recognizer 180 includes metadata 183 with configurable properties, flags, and/or lists that indicate how the event delivery system should perform sub-event delivery to actively involved event recognizers. In some embodiments, metadata 183 includes configurable properties, flags, and/or lists that indicate how event recognizers may interact with one another. In some embodiments, metadata 183 includes configurable properties, flags, and/or lists that indicate whether sub-events are delivered to varying levels in the view or programmatic hierarchy.

In some embodiments, a respective event recognizer 180 activates event handler 189 associated with an event when one or more particular sub-events of an event are recognized. In some embodiments, a respective event recognizer 180 delivers event information associated with the event to event handler 189. Activating an event handler 189 is distinct from sending (and deferred sending) sub-events to a respective hit view. In some embodiments, event recognizer 180 throws a flag associated with the recognized event, and event handler 189 associated with the flag catches the flag and performs a predefined process.

In some embodiments, event delivery instructions 188 includes sub-event delivery instructions that deliver event information about a sub-event without activating an event handler. Instead, the sub-event delivery instructions deliver event information to event handlers associated with the series of sub-events or to actively involved views. Event handlers associated with the series of sub-events or with actively involved views receive the event information and perform a predetermined process.

In some embodiments, data updater 176 creates and updates data used in application 136-1. For example, data updater 176 updates the telephone number used in contacts module 137, or stores a video file used in video player module 145. In some embodiments, object updater 177 creates and updates objects used in application 13G-1. For example, object updater 176 creates a new user-interface object or updates the position of a user-interface object. GUI updater 178 updates the GUI. For example, GUI updater 178 prepares display information and sends it to graphics module 132 for display on a touch-sensitive display.

In some embodiments, event handler(s) 190 includes or has access to data updater 176, object updater 177, and GUI updater 178. In some embodiments, data updater 176, object updater 177, and GUI updater 178 are included in a single module of a respective application 136-1 or application view 191. In other embodiments, they are included in two or more software modules.

It shall be understood that the foregoing discussion regarding event handling of user touches on touch-sensitive displays also applies to other forms of user inputs to operate multifunction devices 100 with input-devices, not all of which are initiated on touch screens, e.g., coordinating mouse movement and mouse button presses with or without single or multiple keyboard presses or holds, user movements taps, drags, scrolls, etc., on touchpads, pen stylus inputs, movement of the device, oral instructions, detected eye movements, biometric inputs, and/or any combination thereof, which may be utilized as inputs corresponding to sub-events which define an event to be recognized.

Figure 2 illustrates a portable multifunction device 100 having a touch screen 112 in accordance with some embodiments. The touch screen may display one or more graphics within user interface (UI) 200. In this embodiment, as well as others described below, a user may select one or more of the graphics by making contact or touching the graphics, for example, with one or more fingers 202 (not drawn to scale in the figure) or one or more styluses 203 (not drawn to scale in the figure). In some embodiments, selection of one or more graphics occurs when the user breaks contact with the one or more graphics. In some embodiments, the contact may include a gesture, such as one or more taps, one or more swipes (from left to right, right to left, upward and/or downward) and/or a rolling of a finger (from right to left, left to right, upward and/or downward) that has made contact with the device 100. In some embodiments, inadvertent contact with a graphic may not select the graphic. For example, a swipe gesture that sweeps over an application icon may not select the corresponding application when the gesture corresponding to selection is a tap.

The device 100 may also include one or more physical buttons, such as "home" or menu button 204. As described previously, the menu button 204 may be used to navigate to any application 136 in a set of applications that may be executed on the device 100. Alternatively, in some embodiments, the menu button is implemented as a soft key in a GUI in touch screen 112.

In one embodiment, the device 100 includes a touch screen 112, a menu button 204, a push button 206 for powering the device on/off and locking the device, volume adjustment button(s) 208, a Subscriber Identity Module (SIM) card slot 210, a head set jack 212, and a docking/charging external port 124. The push button 206 may be used to turn the power on/off on the device by depressing the button and holding the button in the depressed state for a predefined time interval; to lock the device by depressing the button and releasing the button before the predefined time interval has elapsed; and/or to unlock the device or initiate an unlock process. In an alternative embodiment, the device 100 also may accept verbal input for activation or deactivation of some functions through the microphone 113.

Figure 3 is a block diagram of an exemplary multifunction device with a display and a touch-sensitive surface in accordance with some embodiments. The device 300 need not be portable. In some embodiments, the device 300 is a laptop computer, a desktop computer, a tablet computer, a multimedia player device, a navigation device, an educational device (such as a child's learning toy), a gaming system, or a control device (e.g., a home or industrial controller). The device 300 typically includes one or more processing units (CPU's) 310, one or more network or other communications interfaces 360, memory 370, and one or more communication buses 320 for interconnecting these components. The communication buses 320 may include circuitry (sometimes called a chipset) that interconnects and controls communications between system components. The device 300 includes an input/output (I/O) interface 330 comprising a display 340, which is typically a touch screen display. The I/O interface 330 also may include a keyboard and/or mouse (or other pointing device) 350 and a touchpad 355. Memory 370 includes high-speed random access memory, such as DRAM, SRAM, DDR RAM or other random access solid state memory devices; and may include non-volatile memory, such as one or more magnetic disk storage devices, optical disk storage devices, flash memory devices, or other non-volatile solid state storage devices. Memory 370 may optionally include one or more storage devices remotely located from the CPU(s) 310. In some embodiments, memory 370 stores programs, modules, and data structures analogous to the programs, modules, and data structures stored in the memory 102 of portable multifunction device 100 (Figure 1), or a subset thereof. In some embodiments, memory 370 or the computer readable storage medium of memory 370 store the following programs, modules and data structures, or a subset thereof including operation system 126, communication module 128, graphics module 132, text input module 134, on-screen keyboard display module 190 and input interface display module 195.

The operating system 126 includes procedures for handling various basic system services and for performing hardware dependent tasks.

The communication module 128 facilitates communication with other devices via the one or more communication network interfaces 360 (wired or wireless) and one or more communication networks, such as the Internet, other wide area networks, local area networks, metropolitan area networks, cellular networks, and so on.

The graphics module 132 displays graphics on the touch screen 112 or other display. The graphics include various user interfaces such as virtual game controllers, sliders, pickers, wheels and virtual knobs. The user interfaces may be standard user interfaces or custom user interfaces specific to an application programs.

The text input module 134 provides soft keyboards or on-screen keyboards for entering text in various applications (e.g., contacts 137, e-mail 140, IM 141, browser 147, and any other application that needs text input).

In conjunction with the graphics module 132 and the text input module 134, the on-screen keyboard display module 190 determines where and when an on-screen keyboard is displayed. The on-screen keyboard display module 190 also determines when to hide a displayed on-screen keyboard. In some embodiments, the graphics module 132 and the text input module 134 request display instructions from the on-screen keyboard display module 190. In some embodiments, the on-screen keyboard display module 190 sends display instructions to the graphics module 132 and display instructions to the text input module 134. In some embodiments, the on-screen keyboard display module 190 includes display behavior rules 396 for the on-screen keyboard. Each rule 397 specifies an event and the corresponding display action. For example, a rule 397-1 may specify when the event of rotating the device occurs, the corresponding display action is updating the orientation of the displayed on-screen keyboard.

In some embodiments, the on-screen keyboard display module 190 (or an on-screen input interface display module 195) in conjunction with the graphics module 132, the text input module 134 (or an user input module) and the contact/motion module 130 (Figure 1) perform similar functions in relation to hiding and displaying other types of on-screen user input interfaces and virtual controllers associated with respective input fields displayed on a touch screen display, including determining when those different user input interfaces are compatible. Therefore, the descriptions provided herein with respect to hiding and displaying an on-screen keyboard shall be understood to also apply to hiding and displaying other types of user input interfaces on a touch-sensitive display. In any of these situations a goal is to improve effectiveness of a user interface by displaying on-screen user input interfaces for as long as possible to avoid the distraction of hiding and then redisplaying the same user interface, especially when a plurality of input fields with compatible data types are displayed in a single view on the touch-sensitive display. This includes in some embodiments displaying the compatible on-screen user input interfaces in their same positions to avoid disruption in the appearance of the displayed application.

The on-screen keyboard display module 190 determines whether a user interface is compatible with an on-screen keyboard. As discussed in further detail below, a user interface is compatible with an on-screen keyboard if the user interface is capable of accepting text input. For example, a font select box is compatible with an on-screen keyboard because a font selection box is capable of accepting text input. In this example, the on-screen keyboard can be used to specify or narrow the list of fonts in the font selection box. Based on the comparison, the on-screen keyboard display module 190 determines whether to hide the on-screen keyboard concurrently display the user interface and the on-screen keyboard. In conjunction with the graphics module 132 and the text input module 134, the on-screen keyboard display module 190 determines where to display the on-screen keyboard and the user interface. Other pairs of user input interfaces are considered to be compatible when each interface in the pair is configured to input at least some input values associated with the other interface for their associated input fields.

The on-screen keyboard display module 190 configures user interfaces to accept input from an on-screen keyboard. In some embodiments, the on-screen keyboard module 190 configures the on-screen keyboard to direct user input to the user interfaces. For example, a font selection box may be configured to accept input from an on-screen keyboard and the on-screen keyboard is configured to send user input to the font selection box.

The on-screen keyboard display module 190 determines and maintains user interface state data 380. User interface state information 380 includes information related to the active application(s) 382, active input field(s) 384 or icon(s) and the currently displayed user interface(s) 386. Active applications data 382 includes the name and identifiers of all of the active applications. In some embodiments, the active application data includes the current application view. Active input field data 384 includes the input fields that a user has selected and that are still active. Currently displayed user interface data 386 includes the user interfaces that are currently displayed. The interface state information 380 is used by the on-screen keyboard display module 190 to determine when to hide or when to display the on-screen keyboard. For example, if the currently displayed user interfaces data 396 indicates that the on-screen keyboard is currently displayed and the active field data 384 indicates that a input field corresponding to a volume slider is selected, then the on-screen keyboard display module 190 will hide or instruct a module (e.g., the graphics module 132 and the text input module 134) to hide the on-screen keyboard. The on-screen keyboard module 190 also detects changes in the user interface state data 380 and determines whether to display or hide the on-screen keyboard based on detected changes. For example, when the active input field 384 data or the active application data 382 indicates that a user has exited or switched to a different application or application view, the keyboard display module 190 will hide or instruct a module (e.g., the graphics module 132 and the text input module 134) to hide the on-screen keyboard.

The input interface display module 195 determines where and when an interface object is displayed. The input interface module 195 performs similar operations to the on-screen keyboard display module 190 but is not limited to displaying the on-screen keyboard. The input interface module 195 also maintains and uses user interface state data 388 and display behavior rules 398 in a similar way to the on-screen keyboard display module 190. The input interface display module 195 includes user interface state data 388. User interface state data includes active application data 390, active input field data 392 and current displayed user interfaces data 394. The input interface display module 195 includes display behavior rules 398 for each interface object controlled by the input interface display module 195. The display behavior for each interface includes a one or more display behavior rules 399 that define events and correspond display action.

Each of the above identified elements in Figure 3 may be stored in one or more of the previously mentioned memory devices. Each of the above identified modules corresponds to a set of instructions for performing a function described above. The above identified modules or programs (i.e., sets of instructions) need not be implemented as separate software programs, procedures or modules, and thus various subsets of these modules may be combined or otherwise re-arranged in various embodiments. In some embodiments, memory 370 may store a subset of the modules and data structures identified above. Furthermore, memory 370 may store additional modules and data structures not described above.

Attention is now directed towards embodiments of user interfaces ("UI") that may be implemented on a portable multifunction device 100.

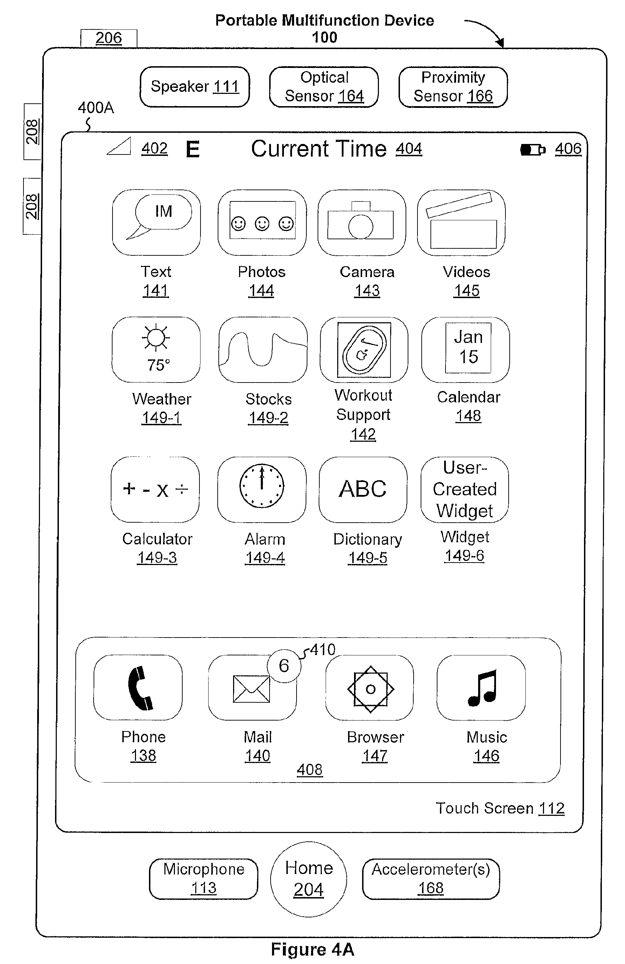

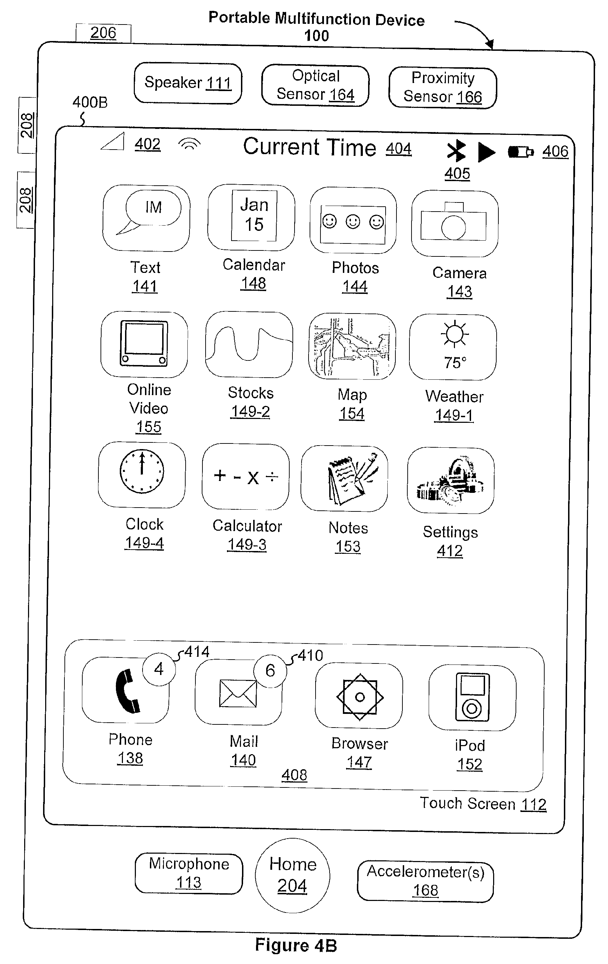

Figures 4A and 4B illustrate exemplary user interfaces for a menu of applications on a portable multifunction device 100 in accordance with some embodiments. Similar user interfaces may be implemented on device 300. In some embodiments, user interface 400A includes the following elements, or a subset or superset thereof:
- Signal strength indicator(s) 402 for wireless communication(s), such as cellular and Wi-Fi signals;
- Time 404;
- Bluetooth indicator 405;
- Battery status indicator 406;
- Tray 408 with icons for frequently used applications, such as:
   o Phone 138, which may include an indicator 414 of the number of missed calls or voicemail messages;
   o E-mail client 140, which may include an indicator 410 of the number of unread e-mails;
   o Browser 147; and
   o Music player 146; and
- Icons for other applications, such as:
   o IM 141;
   o Image management 144;
   o Camera 143;
   o Video player 145;
   o Weather 149-1;
   o Stocks 149-2;
   o Workout support 142;
   o Calendar 148;
   o Calculator 149-3;
   o Alarm clock 149-4;
   o Dictionary 149-5; and
   o User-created widget 149-6.

In some embodiments, user interface 400B includes the following elements, or a subset or superset thereof:
- 4.02, 404, 405, 406, 141, 148, 144, 143, 149-3, 149-2, 149-1, 149-4, 410, 414, 138, 140, and 147, as described above;
- Map 154;
- Notes 153;
- Settings 412, which provides access to settings for the device 100 and its various applications 136, as described further below;
- Video and music player module 152, also referred to as iPod (trademark of Apple Inc.) module 152; and
- Online video module 155, also referred to as YouTube (trademark of Google Inc.) module 155.

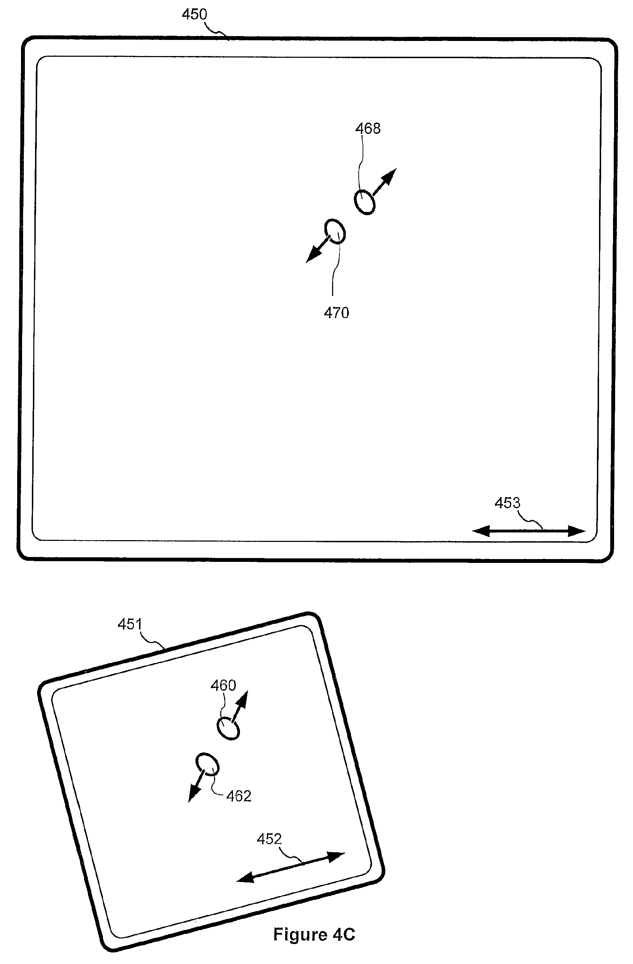

Figure 4C illustrates an exemplary user interface on a device (e.g., device 300, Figure 3) with a touch-sensitive surface 451 (e.g., a tablet or touchpad 355, Figure 3) that is separate from the display 450 (e.g., touch screen display 112). Although many of the examples which follow will be given with reference to inputs on touch screen display 112 (where the touch sensitive surface and the display are combined), in some embodiments, the device detects inputs on a touch-sensitive surface that is separate from the display, as shown in Figure 4C. In some embodiments the touch sensitive surface (e.g., 451 in Figure 4C) has a primary axis (e.g., 452 in Figure 4C) that corresponds to a primary axis (e.g., 453 in Figure 4C) on the display (e.g., 450). In accordance with these embodiments, the device detects contacts (e.g., 460 and 462 in Figure 4C) with the touch-sensitive surface 451 at locations that correspond to respective locations on the display (e.g., in Figure 4C 460 corresponds to 468 and 462 corresponds to 470). In this way, user inputs (e.g., contacts 460 and 462) detected by the device on the touch-sensitive surface (e.g., 451 in Figure 4C) are used by the device to manipulate the user interface on the display (e.g., 450 in Figure 4C) of the multifunction device when the touch-sensitive surface is separate from the display. It should be understood that similar methods may be used for other user interfaces described herein.

Additionally, while the following examples are given primarily with reference to finger inputs (e.g., finger contacts, finger tap gestures, finger swipe gestures), it should be understood that, in some embodiments, one or more of the finger inputs are replaced with input from another input device (e.g., a mouse based input or stylus input). For example, a swipe gesture may be replaced with a mouse click (e.g., instead of a contact) followed by movement of the cursor along the path of the swipe (e.g., instead of movement of the contact). As another example, a tap gesture may be replaced with a mouse click while the cursor is located over the location of the tap gesture (e.g., instead of detection of the contact followed by ceasing to detect the contact). Similarly, when multiple user inputs are simultaneously detected, it should be understood that multiple computer mice may be used simultaneously, or a mouse and finger contacts may be used simultaneously.

Attention is now directed towards embodiments of user interfaces ("UI") and associated processes that may be implemented on a multifunction device with a display and a touch-sensitive surface, such as device 300 or portable multifunction device 100.

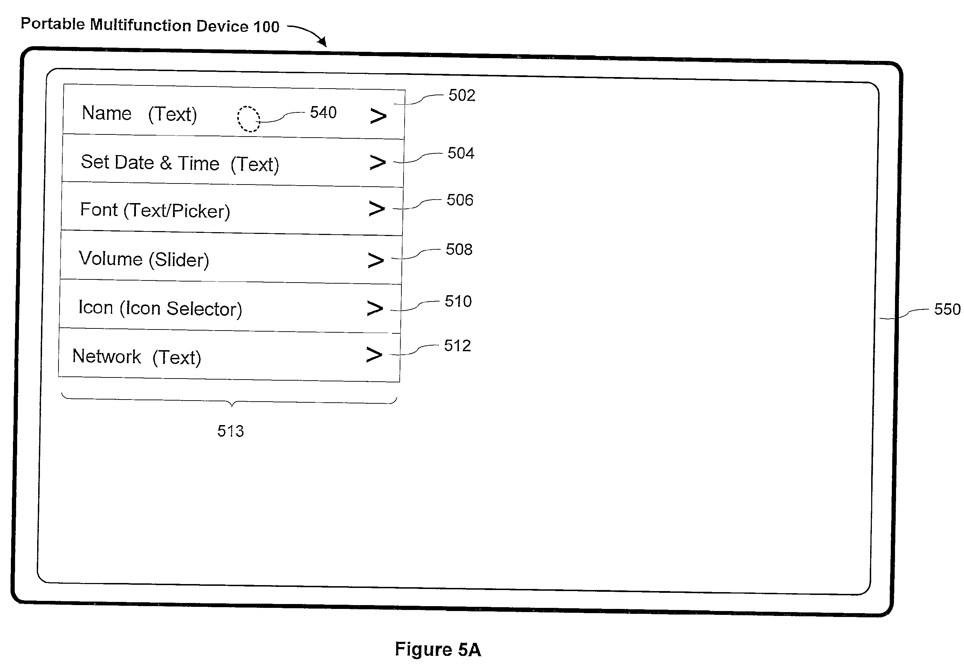

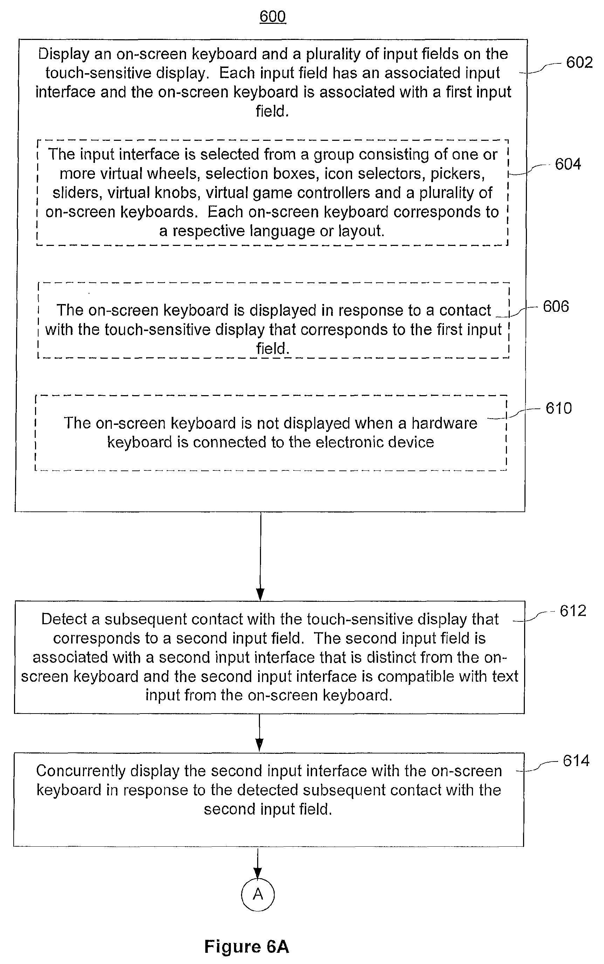

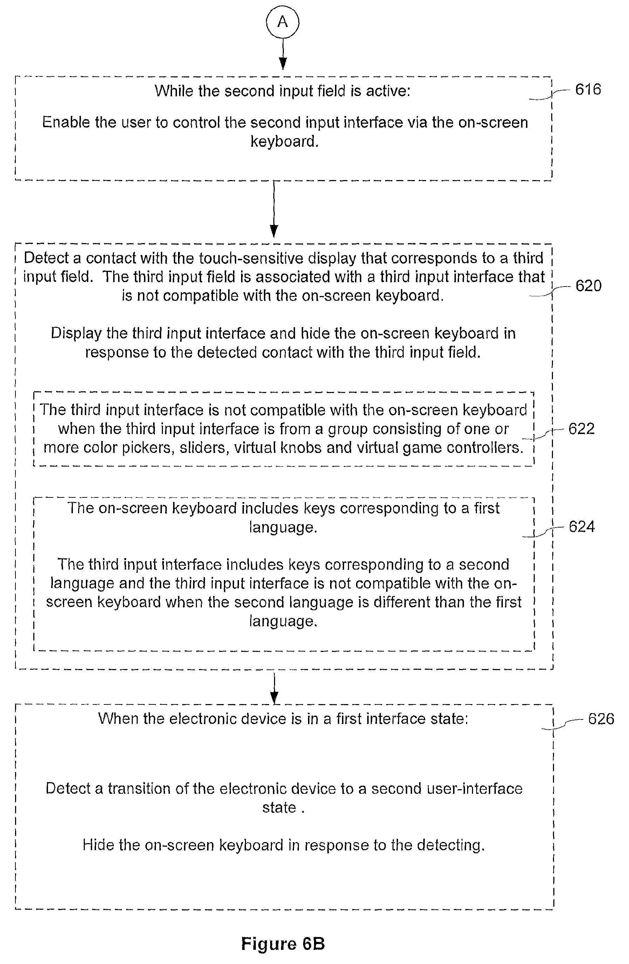

Figures 5A-5G illustrate exemplary user interfaces for automatically displaying and hiding an on-screen keyboard in accordance with some embodiments. The user interfaces in these figures are used to illustrate the processes described below, including the processes in Figures 6A and 6B. It is noted that the device 100 may be used in either a portrait orientation or a landscape orientation.

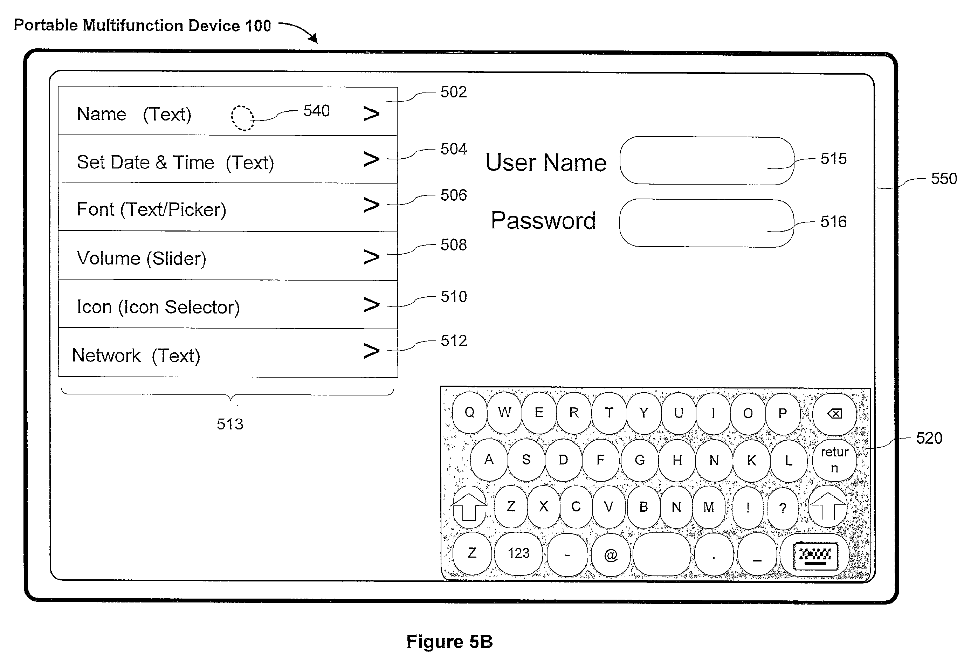

Figure 5A illustrates a portable multifunction device 100 displaying multiple exemplary input fields 513 on a display 550. Each field is associated with a user interface object. For example, Font field 506 is associated with a "text/picker" and Volume field 508 is associated with a slider. The user interface associated with the field is displayed in response to user selection of the field. The user interfaces may be custom user interfaces specific to an application or standard user interfaces supplied by the device 100. In some embodiments, the input fields 513 are displayed in response to execution of one or more applications 136 (Figure 1B) or other applications. For example, the fields 513 could be associated with a settings menu associated with a particular application, such as a media player application or a email application. In Figure 5A, the dashed circle 540 corresponds to a finger contact with the touch sensitive display. Figure 5B shows the display 550 when a user selects a "Name" field 502 from Figure 5A. As shown in Figure 5B, a "User Name" field 515, a "Password" field 516 and an on-screen keyboard 520 are displayed in response to selection 540 of the "Name" field 502. The on-screen keyboard 520 may be used to input one or more text characters into the fields S15 and 516.

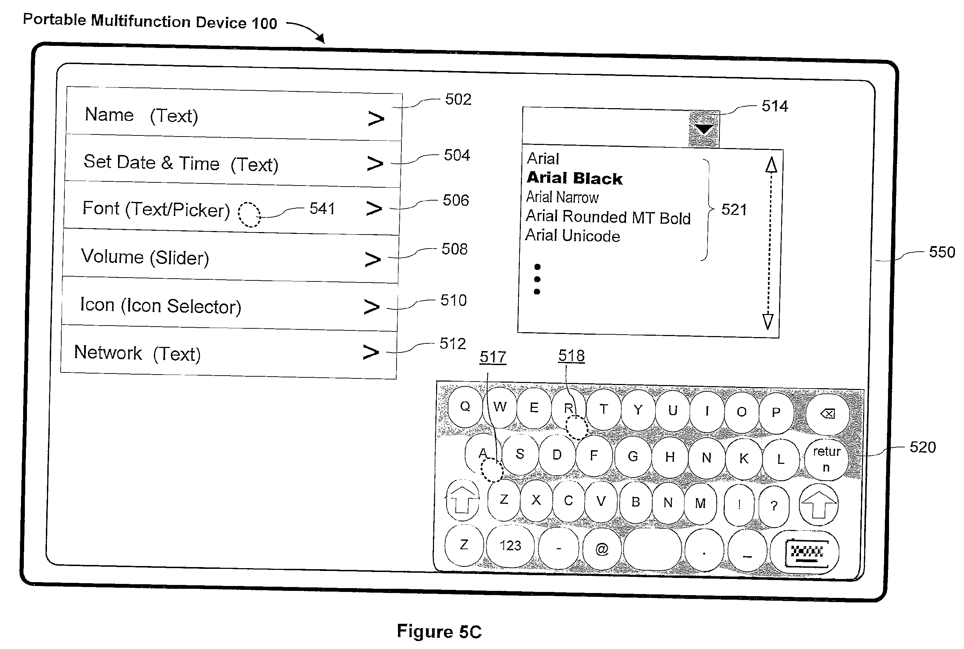

Figure 5C shows the resulting display 550 when a user selects the "Font" field 506 from the interface state shown in Figure 5B. In response to the user selection 541, the "User Name" field 515 (Figure 5B) and the "Password" field 516 (Figure 5B) disappear and a font selection box 514 is displayed. As shown in Figure 5C, the on-screen keyboard 520 remains. As discussed in further detail below, the on-screen keyboard 520 is displayed while the user makes subsequent selections of input fields that have input interfaces that are compatible with the on-screen keyboard 250. Since both fields are text fields, the on-screen keyboard remains displayed. Continually displaying, hiding and re-displaying the on-screen keyboard is distracting to a user. A user may interact directly with the font selection box 514 to select a font. It is noted that the font selection box 514 is compatible with the on-screen keyboard 520 and is configured to accept text input from the on-screen keyboard 520. As shown in Figure 5C, a user has pressed "A" and "R" as shown by the dashed circles 517 and 518. The font selection box 514 includes font suggestions 521 that start with "AR." A user may also completely type out the name of a font using the on-screen keyboard 520. Some users may prefer to use the on-screen keyboard 520 to control other interfaces such as the font selection box 514.

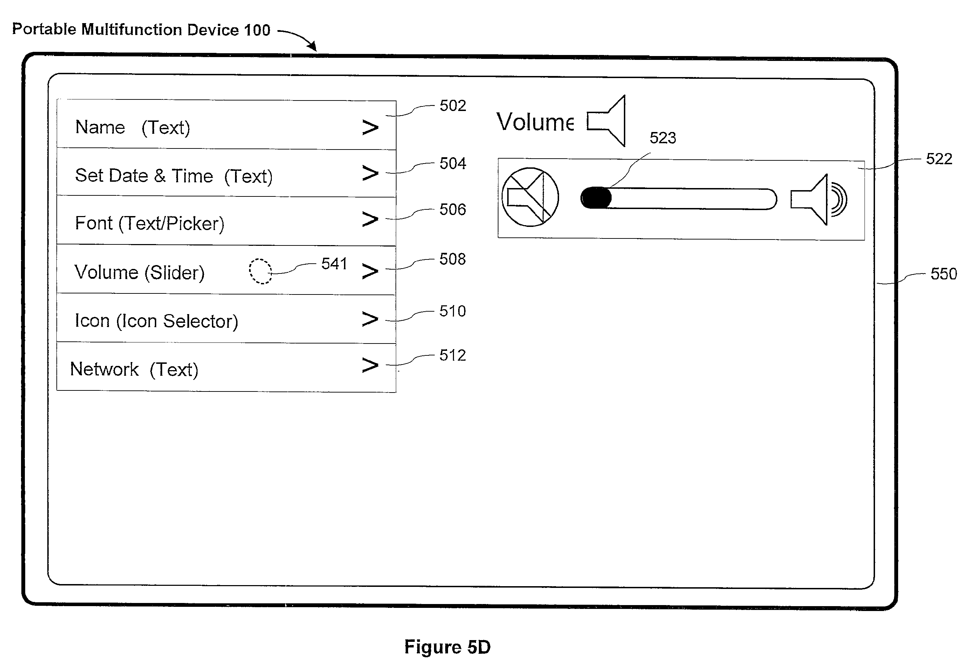

Figure 5D shows the resulting display 550 when a user selects an input field (i.e., "Volume" field 508) having an associated input interface that is incompatible with the displayed on-screen keyboard 520 shown in Figure 5C. In this case, the "volume" field 508 has a type of user interface (i.e., slider) which is incompatible with a text field. As shown in Figure 5D, when a user selects the "Volume" field 508, the font selection box 514 (Figure 5B) and the on-screen keyboard 520 (Figure 5B) disappear and a volume slider 522 is displayed. As discussed in further detail below, the on-screen keyboard 520 (Figure 5B) is hidden because it is not compatible with the volume slider 522. In particular, a slider does not accept text input. In some embodiments, an on-screen keyboard that includes arrows is compatible with the volume slider 522 and would be concurrently displayed with the volume slider 522. For example, in such an embodiments, by pressing a respective arrow on the on-screen keyboard, the knob 523 on the volume slider 522 would move a direction corresponding to the direction of the respective arrow.

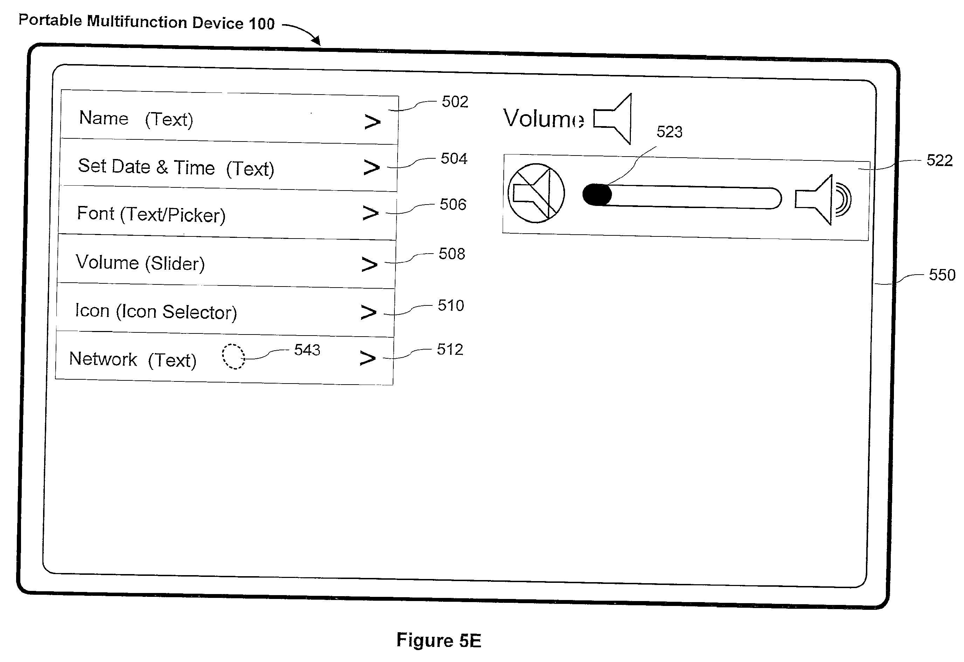

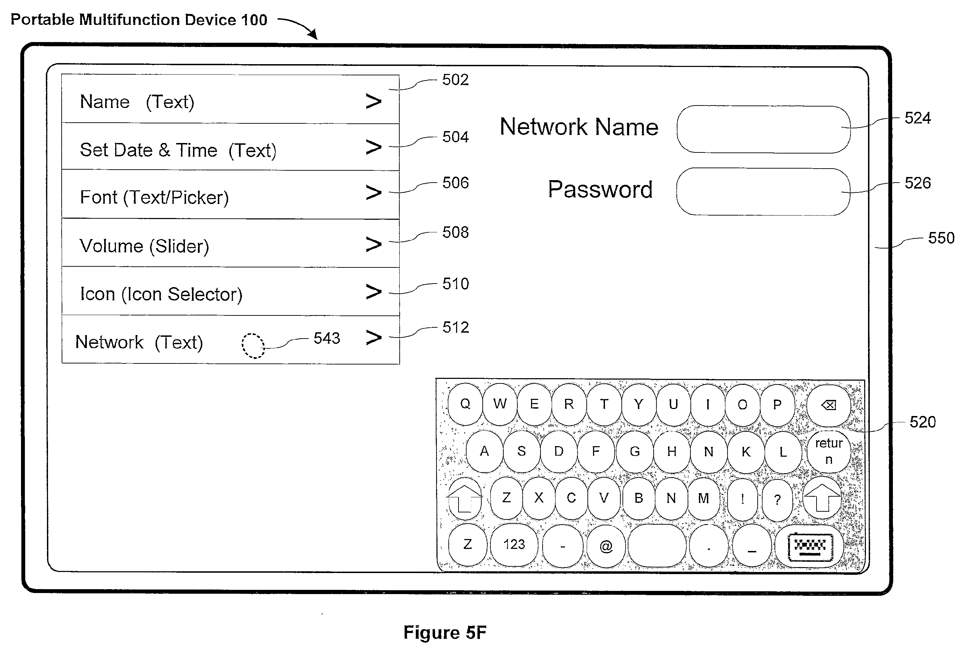

Figure 5E shows a user selection 543 of the "Network" field 512. Figure 5F shows the resulting display 550 when a user selects the "Network" field 512 in Figure 5E. As shown in Figure 5F, the volume slider 522 disappears (Figure 5E), a "Network Name" icon 524 is displayed, a "Password" field 515 is displayed and an on-screen keyboard 520 is displayed. The volume slider 522 disappears because it is incompatible with the on-screen keyboard 520. In some embodiments, only the on-screen keyboard is displayed persistently while the other interfaces are displayed or hidden depending the active field.

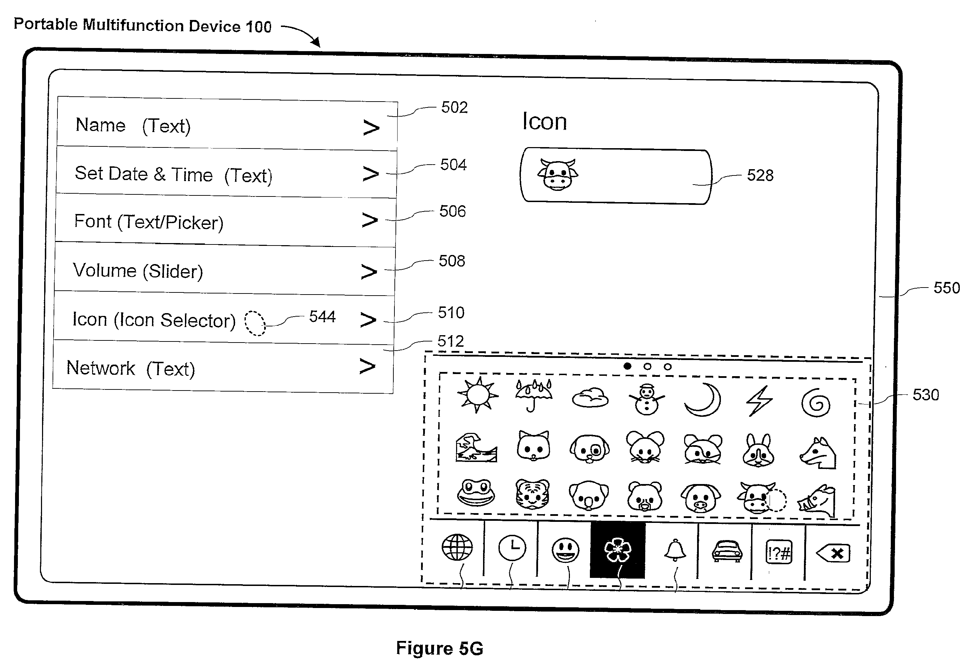

Figure 5G shows the resulting display 550 when a user selects the "Icon" field 510 in Figure 5F. As shown in Figure 5F, the "Network Name" field 524, the "Password" field 526 and an on-screen keyboard 520 disappear. An icon input field 528 and an icon selector 530 are displayed. The on-screen keyboard 520 from Figure 5E is hidden because it is incompatible with the icon selector 540. In Figure 5G, the icon field 528 requires icons which the on-screen keyboard 520 does not have.

Figures 6A and 6B are flow diagrams illustrating a method 600 of automatically displaying and hiding an on-screen keyboard in accordance with some embodiments. The method 600 is performed at a electronic device (e.g., device 300, Figure 3, or portable multifunction device 100, Figure 1) with a display and a touch-sensitive surface. In some embodiments, the display is a touch screen display and the touch-sensitive surface is on the display. In some embodiments, the display is separate from the touch-sensitive surface. Some operations in method 600 may be combined and/or the order of some operations may be changed.

As described below, the method 600 provides an intuitive way to display and hide an on-screen keyboard. The method 600 also determines where to display the on-screen keyboard so it does not conflict with the displayed fields associated with the application. In addition, after the on-screen keyboard is displayed, it is displayed in the same position for as long as possible based on compatibility of the input interfaces associated with other fields of the same application window. For example, when used in conjunction with an application (such as web page) with multiple input fields, the on-screen keyboard continues to be displayed as the user selects other input fields until the user selects an input field that has an associated input interface that is incompatible with the on-screen keyboard. The method reduces the distraction to the user when a user selects multiple input fields, thereby creating a more efficient human-machine interface.

In accordance with some embodiments, a computer-implemented method is performed at an electronic device including one or more processors, memory and a touch-sensitive display. Display an on-screen keyboard and plurality of input fields on the touch-sensitive display (602). For example, the input fields may be text fields or drop down menus. In some embodiments, the input fields are icons (e.g., 513, Figure 5A). The on-screen keyboard may correspond to any language and any layout. For example, the on-screen keyboard 520 may be presented as a QWERTY, AZERTY or Dvorak keyboard. Each input field has an associated input interface and the on-screen keyboard is associated with a first input field (602). The user may select one or more soft keys of the on-screen keyboard to enter text into the first input field. The input interface is selected from a group consisting of one or more virtual wheels, selection boxes, icon selectors, pickers, sliders, virtual knobs, virtual game controllers and a plurality of on-screen keyboards (604). For example, in Figure 5A, the "Name" field 502 is associated with text entry interface and the "Volume" field 508 is associated with a slider interface. Each on-screen keyboard corresponds to a respective language or layout (604). For example, there may be a on-screen keyboard for each written and spoken language such as English, French and German. In some embodiments, the input fields are displayed by the graphics module 132.

In some embodiments, the on-screen keyboard is displayed in response to a contact with the touch-sensitive display that corresponds to the first input field (606). In some embodiments, the first input field is a text input field that is associated with an on-screen keyboard. In some embodiments, the first input field is an icon that when selected displays one or more input fields. For example, as shown in Figure 5B, additional input fields (e.g., text field 515, text field 516, Figure 5B) appear in response to user selection of the "Name" field 502.

In some embodiments, the on-screen keyboard is displayed: at a size that is smaller than the area of the touch-sensitive display, at an orientation that corresponds to the orientation of the touch-sensitive display and in a portion of the touch-sensitive display that is determined to minimally interfere with the active application. In some embodiments, the on-screen keyboard is displayed at the bottom of the touch-sensitive display and at an orientation that corresponds to the orientation of the touch-sensitive display. In some embodiments, when the orientation of the touch-sensitive display changes (e.g., from portrait to landscape), the on-screen keyboard is repositioned at the bottom of the touch-sensitive display and at an orientation corresponding to the orientation of the touch-sensitive display. In some embodiments, the on-screen keyboard display module 190 determines where the on-screen keyboard is displayed.

In some embodiments, the on-screen keyboard is not displayed when a hardware keyboard is connected to the electronic device (610). An on-screen keyboard may not be necessary when a hardware keyboard is attached to the electronic device and the on-screen keyboard may unnecessarily occupy display screen space. In some embodiments, when the first input field requires input from the on-screen keyboard, the on-screen keyboard is displayed even though a hardware keyboard is attached to the electronic device. The on-screen keyboard may include one or more symbols that the hardware keyboard does not have. For example, the input field may require Greek symbol input and the on-screen keyboard includes Greek symbols while the hardware keyboard may not. In some embodiments, the on-screen keyboard display module 190 determines whether the on-screen keyboard is displayed.

Detect a subsequent contact with the touch-sensitive display that corresponds to a second input field (612). The second input field is associated with a second input interface that is distinct from the on-screen keyboard and the second input interface is compatible with text input from the on-screen keyboard (612). An input interface that is compatible with the on-screen keyboard is an interface that is capable of accepting input from an on-screen keyboard. In some embodiments, an input interface is compatible with an on-screen keyboard if the input interface is capable of accepting text input. For example, as shown in Figure 5C, a font picker (514, Figure 5C) is compatible with an on-screen keyboard (520, Figure 5C). A user may use the font selection box (514, Figure 5C) interface to select a font. The user may also use the on-screen keyboard (520, Figure 5C) to specify a font or narrow the list of font selections (521, Figure 5C). In another example, a color picker that displays a range of colors is not compatible with an on-screen keyboard because the color picker does not accept text input. In some embodiments, an on-screen keyboard may include one or more keys that allow the on-screen keyboard to be compatible with a greater range of user interfaces. For example, in some embodiments, the on-screen keyboard includes directional arrows that allow the on-screen keyboard to control a knob on a slider, the rotational direction of a virtual wheel and a virtual joystick. Thus, the compatibility of the on-screen keyboard and the user interface will in part depend on the language and layout of the on-screen keyboard. In some embodiments, the on-screen keyboard display module 190 determines whether the input interface and the on-screen keyboard are compatible.

Concurrently display the second input interface with the on-screen keyboard in response to the detected subsequent contact with the second input field (614). In other words, both the on-screen keyboard and the second interface are displayed at the same time. In some embodiments, the second input interface is displayed out of the second input field. In some embodiments, the second input interface is displayed next to or in close proximity to the second input field. As shown in Figure 5C, the on-screen keyboard 520 is concurrently displayed with the font selection box 514. In some embodiments, the on-screen keyboard module 190 determines the how the user interface and the on-screen keyboard are displayed.

In some embodiments, while the second input field is active, enable the user to control the second input interface via the on-screen keyboard (616). In other words, while the second input interface is concurrently displayed with the on-screen keyboard, the on-screen keyboard is configured to control the second input interface. For example, as shown in Figure 5C, the on-screen keyboard can specify or narrow the list of fonts 521 in the font selection box 514. As shown in Figure 5C, when a user selects "A" and then "R" the fonts 521 in the selection box 514 start with "AR."

In some embodiments, while the on-screen keyboard is displayed, subsequent selections with the touch-sensitive display that correspond to input fields having associated input interfaces that are compatible with the on-screen keyboard are detected. In other words, while the on-screen keyboard is displayed, the user selects icons or input fields that have associated input interfaces that are compatible with the on-screen keyboard. In some embodiments, the icons or input fields are text input fields requiring input from an on-screen keyboard. As the user selects each subsequent input field or icon, the associated input interfaces, that are compatible with the on-screen keyboard, are displayed or hidden while the on-screen keyboard is continually displayed. In other words, the on-screen keyboard is displayed as long as the user selects input fields that are associated with input interfaces that are compatible with the on-screen keyboard. For example, Figures 5B shows an on-screen keyboard 520 and text fields 515 and 516. Figure 5C shows the resulting screen when a user selects the "Font" field 506 from interface state shown in Figure 5B. As shown in Figure 5C, the fields 515 and 516 from Figure 5B disappear, a font selection box 514 appears and the on-screen keyboard 520 remains displayed. If the user subsequently selects the "Set Date & Time" field 504 of the user interface state shown in Figure 5C, the font selection box 514 will disappear, new input interfaces corresponding to the "Set Date & Time" field 504 will be displayed and the on-screen keyboard 520 will remain displayed. In summary, after an on-screen keyboard is displayed and as the user makes subsequent selections of input fields, the on-screen keyboard is displayed as long the input interface associated with the subsequently selected input fields are compatible with the on-screen keyboard. Continually hiding and redisplaying the on-screen keyboard is distracting to the user. Some users may prefer to use the on-screen keyboard to control other input views.

In some embodiments, while the second input filed is active and the second input interface is displayed, detect a contact with the touch-sensitive display that corresponds to a third input field (620). The third input field is associated with a third input interface that is not compatible with the on-screen keyboard (620). Display the third input interface and hide the on-screen keyboard in response to the detected contact with the third input field (620). The third input interface is not compatible with the on-screen keyboard when the third input interface is from a group consisting of one or more color pickers, sliders, virtual knobs and virtual game controllers (622). For example, as shown in Figure 5C, while the font selection box 514 and the on-screen keyboard 520 are concurrently displayed, the user selects the "Volume" field 508. After the selection, as shown in Figure 5D, the font selection box 514 disappears, a volume slider 522 is displayed and the on-screen keyboard 520 is hidden. In some embodiments, the on-screen keyboard includes keys corresponding to a first language (624). The third input interface includes keys corresponding to a second language and the third input interface is not compatible with the on-screen keyboard when the second language is different than the first language (624). Thus, when a user selects an input field requiring an on-screen keyboard that corresponds to a different language than the language of the displayed on-screen keyboard, the displayed on-screen keyboard is hidden. In some embodiments, the on-screen display module 190 determines whether the third interface is compatible with the on-screen keyboard and determines whether the on-screen keyboard should hidden.

In some embodiments, when the first electronic device is in a first interface state, detect a transition of the electronic device to a second user-interface state (626). Hide the on-screen keyboard in response to the detecting (626). In some embodiments, the state information includes information about the active application, the active icon or field and the displayed user interfaces. For example, the on-screen keyboard is displayed in a first screen and when a user navigates to a different screen or application (e.g., by selecting an icon or button), the on-screen keyboard is hidden. When a user navigates away from a screen displaying an on-screen keyboard, the on-screen keyboard is no longer necessary and therefore does not need to be displayed. In some embodiments, the user-interface state information is stored in the on-screen keyboard display module 190 as user interface state data 191. In some embodiments, the on-screen keyboard display module 190 collects user interface state data 191 and determines changes in user-interface state.

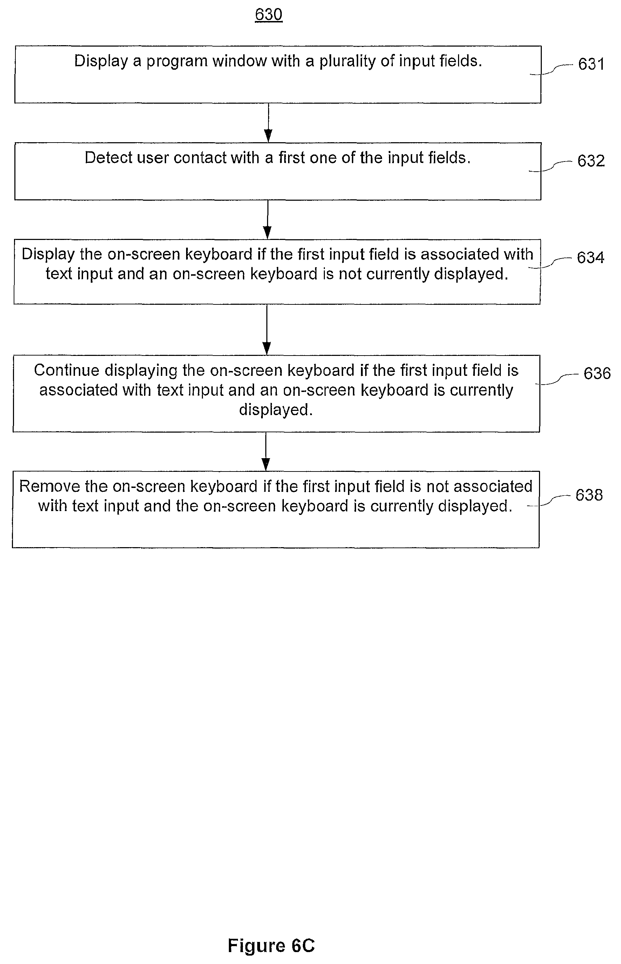

Figure 6C is a flow diagram illustrating a method 630 of automatically displaying and hiding an on-screen keyboard in accordance with some embodiments. The method 630 is performed at an electronic device (e.g., device 300, Figure 3, or portable multifunction device 100, Figure 1) including one or more processors, memory, a display and a touch-sensitive surface. In some embodiments, the display is a touch screen display and the touch-sensitive surface is on the display. In some embodiments, the display is separate from the touch-sensitive surface. Some operations in method 630 may be combined and/or the order of some operations may be changed.

In some embodiments, display a program window with a plurality of input fields (631). Detect a user contact with a first one of the input fields is detected (632). Display the on-screen keyboard if the first input field is associated with text input and an on-screen keyboard is not currently displayed (634). Continue displaying the on-screen keyboard if the first input field is associated with text input and an on-screen keyboard is not currently displayed (636). Remove the on-screen keyboard if the first input field is not associated with text input and the on-screen keyboard is currently displayed (638).

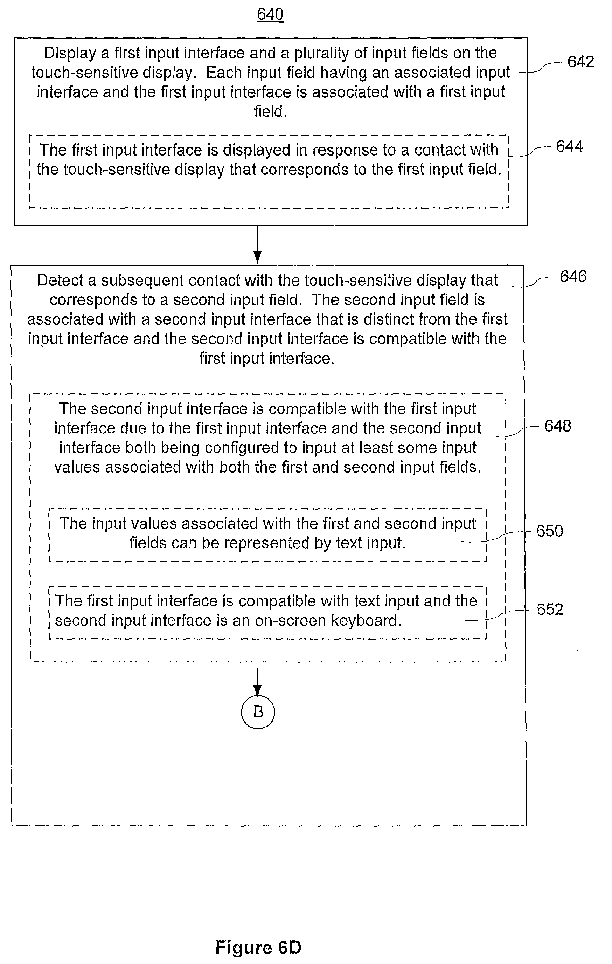

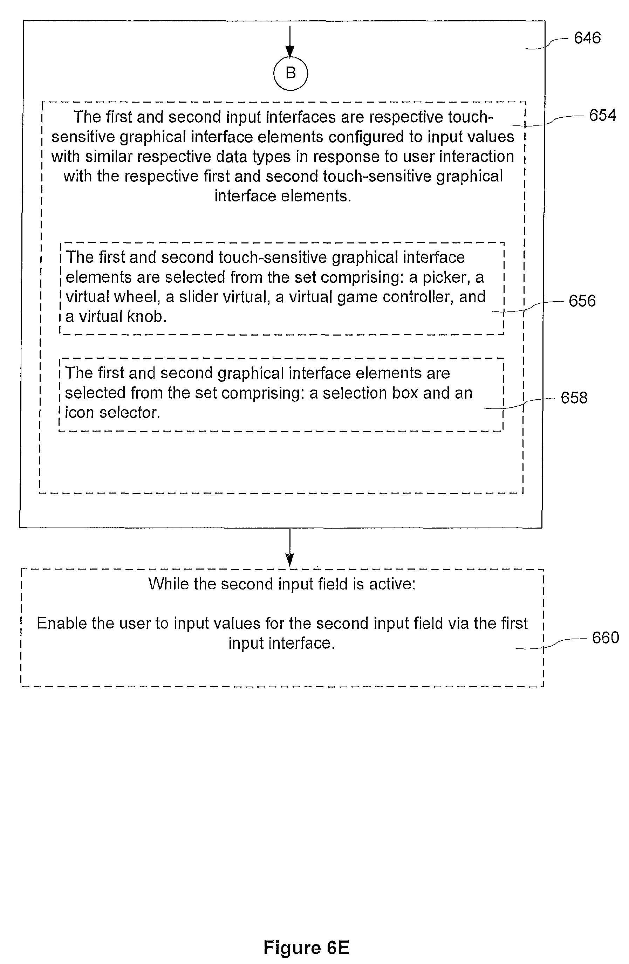

Figure 6D and 6E are flow diagrams illustrating a method 640 of automatically displaying and hiding an on-screen user input interface in accordance with some embodiments. The method 640 is performed at an electronic device (e.g., device 300, Figure 3, or portable multifunction device 100, Figure 1) including one or more processors, memory, a display and a touch-sensitive surface. In some embodiments, the display is a touch screen display and the touch-sensitive surface is on the display. In some embodiments, the display is separate from the touch-sensitive surface. Some operations in method 640 may be combined and/or the order of some operations may be changed.

Display a first input interface and a plurality of input fields on the touch-sensitive display (642). Each input field having an associated input interface and the first input interface is associated with a first input field (642). In some embodiments, the first input interface is displayed in response to a contact with the touch-sensitive display that corresponds to the first input field (644).

Detect a subsequent contact with the touch-sensitive display that corresponds to a second input field (646). The second input field is associated with a second input interface that is distinct from the first input interface and the second input interface is compatible with the first input interface (646). In some embodiments, the second input interface is compatible with the first input interface due to the first input interface and the second input interface both being configured to input at least some input values associated with both the first and second input fields (648). For example, the first and second input values may be configured to accept text and the first input interface and the second input interface are configured to input text. In other words, the first and second input interfaces have compatible input values. For example, an on-screen keyboard and a font selection box both accept text. In some embodiments, the input values associated with the first and second input fields can be represented by text input (650). In some embodiments, the first input interface is compatible with text input and the second input interface is an on-screen keyboard (652).

In some embodiments, the first and second input interfaces are respective touch-sensitive graphical interface elements configured to input values with similar respective data types in response to user interaction with the respective first and second touch-sensitive graphical interface elements (654). In some embodiments, the first and second touch-sensitive graphical interface elements are selected from the set comprising: a picker, a virtual wheel, a slider virtual, a virtual game controller, and a virtual knob (656). In some embodiments, the first and second graphical interface elements are selected from the set comprising: a selection box and an icon selector (658).

In some embodiments, while the second input field is active, enable the user to input values for the second input field via the first input interface (660). For example, when a user may use an on-screen keyboard to specify or narrow font selections in a font selection box.

The steps in the information processing methods described above may be implemented by running one or more functional modules in information processing apparatus such as general purpose processors or application specific chips. These modules, combinations of these modules, and/or their combination with general hardware (e.g., as described above with respect to Figures 1A, 1B, 1C and 3) are all included within the scope of protection of the invention.

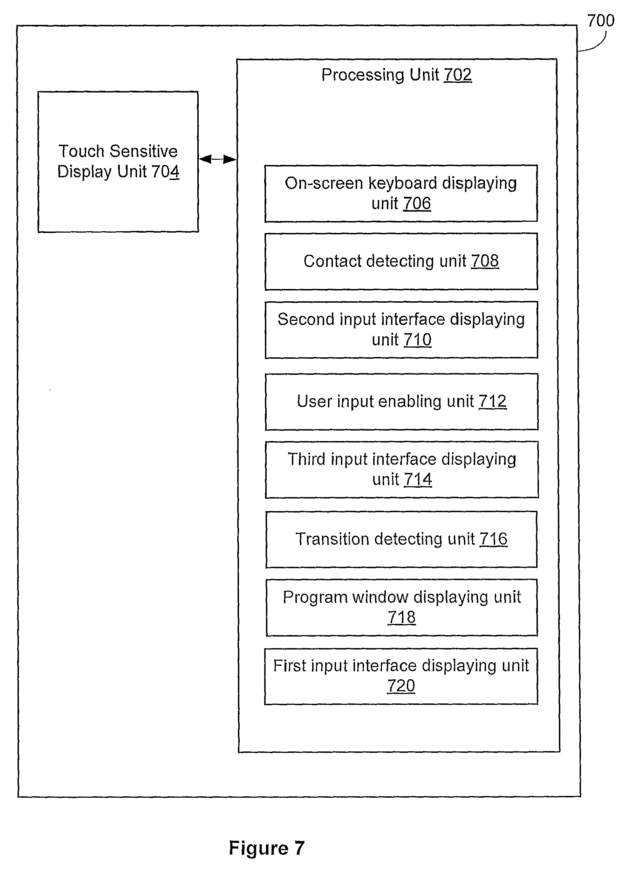

In accordance with some embodiments, Figure 7 shows a functional block diagram of an electronic device 700 configured in accordance with the principles of the invention as described above. The functional blocks of the device may be implemented by hardware, software, or a combination of hardware and software to carry out the principles of the invention. It is understood by persons of skill in the art that the functional blocks described in Figure 7 may be combined or separated into sub-blocks to implement the principles of the invention as described above. Therefore, the description herein may support any possible combination or separation or further definition of the functional blocks described herein.

As shown in Figure 7, an electronic device 700 includes a processing unit 702 and a touch-sensitive display unit 704 coupled to the processing unit 702. In some embodiments, the processing unit includes an on-screen keyboard displaying unit 706, contact detecting unit 708, a second input interface displaying unit 710, a user input enabling unit 712, a third input interface displaying unit 714, a transition detecting unit 716, and a program window displaying unit 718.

In some embodiments, the processing unit 702 is configured to: display an on-screen keyboard and a plurality of input fields on the touch-sensitive display unit 704 (e.g., with the on-screen keyboard displaying unit 706), each input field having an associated input interface, wherein the on-screen keyboard is associated with a first input field; detect a contact with the touch-sensitive display unit 704 (e.g., with the contact detecting unit 708) that corresponds to a second input field, wherein the second input field is associated with a second input interface that is distinct from the on-screen keyboard and wherein the second input interface is compatible with text input from the on-screen keyboard; and in response to the detected subsequent contact with the second input field, display the second input interface concurrently with the on-screen keyboard on the touch-sensitive display unit 704 (e.g., with the second input interface displaying unit 710).

In some embodiments, the input interface is selected from a group consisting of one or more virtual wheels, selection boxes, pickers, sliders, virtual knobs, virtual game controllers and a plurality of on-screen keyboards, each on-screen keyboard corresponding to a respective language or layout.

In some embodiments, the processing unit 702 is further configured to: while the second input field is active, enable a user of the electronic device to control the second input interface via the on-screen keyboard (e.g., with the user input enabling unit 712).

In some embodiments, the processing unit 702 is further configured to: detect a contact with the touch-sensitive display unit 704 (e.g., with the contact detecting unit 708) that corresponds to a third input field, wherein the third input field is associated with a third input interface that is not compatible with the on-screen keyboard; and in response to the detected contact with the third input field, on the touch sensitive display unit 704, display the third input interface (e.g., with the third input interface displaying unit 714) and hide the on-screen keyboard (e.g., with the on-screen keyboard displaying unit 706).

In some embodiments, the third input interface is not compatible with the on-screen keyboard when the third input interface is from a group consisting of one or more color pickers, sliders, virtual knobs and virtual game controllers.

In some embodiments, the on-screen keyboard includes keys corresponding to a first language; the third input interface includes keys corresponding to a second language; and the third input interface is not compatible with the on-screen keyboard when the second language is different than the first language.

In some embodiments wherein the electronic device is in a first user-interface state, the processing unit 702 is further configured, while the electronic device is in the first user-interface state, to: detect a transition of the electronic device to a second user-interface state (e.g., with a transition detecting unit 716); and in response to the detecting, hide the on-screen keyboard (e.g., with the on-screen keyboard displaying unit 706).

In some embodiments, the on-screen keyboard is not displayed by the processing unit 702 when a hardware keyboard is attached to the electronic device.

In some embodiments, the on-screen keyboard is displayed by the processing unit 702 on the touch-sensitive display unit 704 (e.g., with the on-screen keyboard displaying unit 706) in response to a contact with the touch-sensitive display unit that corresponds to the first input field.

In some embodiments, the processing unit 702 is configured to: display a program window with a plurality of input fields on the touch sensitive display unit 704 (e.g., with the program window displaying unit 718); detect a user contact with a first one of the input fields (e.g., with the contact detecting unit 708); if the first input field is associated with text input and an on-screen keyboard is not currently displayed, display the on-screen keyboard on the touch-sensitive display unit 704 (e.g., with the on-screen keyboard displaying unit 706); if the first input field is associated with text input and an on-screen keyboard is currently displayed, continue to display the on-screen keyboard on the touch-sensitive display unit 704 (e.g., with the on-screen keyboard displaying unit 706); and if the first input field is not associated with text input and the on-screen keyboard is currently displayed, remove the on-screen keyboard from display on the touch-sensitive display unit 704 (e.g., with the on-screen keyboard displaying unit 706).

In some embodiments, the processing unit 702 is configured to: display a first input interface and a plurality of input fields on the touch-sensitive display unit 704 (e.g., with the first input interface displaying unit 720), each input field having an associated input interface and wherein the first input interface is associated with a first input field; detect a subsequent contact with the touch-sensitive display unit that corresponds to a second input field (e.g., with the contact detecting unit 708), wherein the second input field is associated with a second input interface that is distinct from the first input interface and wherein the second input interface is compatible with the first input interface; and in response to the detected subsequent contact with the second input field, display the second input interface concurrently with the first input interface (e.g., with the second input interface displaying unit 710).

In some embodiments, the second input interface is compatible with the first input interface due to the first input interface and the second input interface both being configured to input at least some input values associated with both the first and second input fields.

In some embodiments, the input values associated with the first and second input fields can be represented with text input.

In some embodiments, the first input interface is an on-screen keyboard and the second input interface is compatible with text input.

In some embodiments, the first input interface is compatible with text input and the second input interface is an on-screen keyboard.

In some embodiments, the first and second input interfaces are respective touch-sensitive graphical interface elements configured to input values with similar respective data types in response to user interaction with the respective first and second touch-sensitive graphical interface elements.

In some embodiments, the first and second touch-sensitive graphical interface elements are selected from the set comprising: a picker, a virtual wheel, a slider virtual, a virtual game controller, and a virtual knob.

In some embodiments, the first and second graphical interface elements are selected from the set comprising: a selection box and an icon selector.

In some embodiments, the processing unit is configured to: while the second input field is active: enable the user to input values for the second input field (e.g., with the user input enabling unit 712) via the first input interface.

In some embodiments, the first input interface is displayed by the processing unit 702 (e.g., with the first input interface displaying unit 720) in response to a contact with the touch-sensitive display unit 704 that corresponds to the first input field.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A computer-implemented method for displaying an on-screen keyboard, comprising:
at an electronic device including one or more processors, memory and a touch-sensitive display:
displaying an on-screen keyboard and a plurality of input fields on the touch-sensitive display, each input field having an associated input interface, wherein the on-screen keyboard is associated with a first input field;
detecting a contact with the touch-sensitive display that corresponds to a second input field, wherein the second input field is associated with a second input interface that is distinct from the on-screen keyboard and wherein the second input interface is compatible with text input from the on-screen keyboard; and
in response to the detected subsequent contact with the second input field, displaying the second input interface concurrently with the on-screen keyboard.

2. The method of claim 1, wherein the input interface is selected from a group consisting of one or more virtual wheels, selection boxes, pickers, sliders, virtual knobs, virtual game controllers and a plurality of on-screen keyboards, each on-screen keyboard corresponding to a respective language or layout.

3. The method of claim 1, further comprising:
while the second input field is active:
enabling a user of the electronic device to control the second input interface via the on-screen keyboard.

4. The method of claim 1 or 2, further comprising:
detecting a contact with the touch-sensitive display that corresponds to a third input field, wherein the third input field is associated with a third input interface that is not compatible with the on-screen keyboard; and
in response to the detected contact with the third input field, displaying the third input interface and hiding the on-screen keyboard.

5. The method of claim 4, wherein the third input interface is not compatible with the on-screen keyboard when the third input interface is from a group consisting of one or more color pickers, sliders, virtual knobs and virtual game controllers.

6. The method of claim 4 or 5, wherein:
the on-screen keyboard includes keys corresponding to a first language;
the third input interface includes keys corresponding to a second language; and
the third input interface is not compatible with the on-screen keyboard when the second language is different than the first language.

7. The method of claim 1, wherein the electronic device is in a first user-interface state;
the method further comprising, while the electronic device is in the first user-interface state, detecting a transition of the electronic device to a second user-interface state; and
in response to the detecting, hiding the on-screen keyboard.

8. The method of claim 1, wherein the on-screen keyboard is not displayed when a hardware keyboard is attached to the electronic device.

9. The method of claim 1, wherein the on-screen keyboard is displayed in response to a contact with the touch-sensitive display that corresponds to the first input field.

10. A portable electronic device, comprising:
A touch-sensitive display;
memory;
one or more processors;
one or more programs stored in memory and configured for execution by the one or more processors, the one or more programs including instructions for:
displaying an on-screen keyboard and a plurality of input fields on the touch-sensitive display, each input field having an associated input interface and wherein the on-screen keyboard is associated with a first input field;
detecting a contact with the touch-sensitive display that corresponds to a second input field, wherein the second input field is associated with a second input interface that is distinct from the on-screen keyboard and wherein the second input interface is compatible with text input from the on-screen keyboard; and
in response to the detected subsequent contact with the second input field, displaying the second input interface concurrently with the on-screen keyboard.

11. A computer readable storage medium storing one or more programs configured to be executed by a computer system, the one or more programs comprising instructions for:
displaying an on-screen keyboard and a plurality of input fields on the touch-sensitive display, each input field having an associated input interface and wherein the on-screen keyboard is associated with a first input field;
detecting a contact with the touch-sensitive display that corresponds to a second input field, wherein the second input field is associated with a second input interface that is distinct from the on-screen keyboard and wherein the second input interface is compatible with text input from the on-screen keyboard; and
in response to the detected subsequent contact with the second input field, displaying the second input interface concurrently with the on-screen keyboard.
